(19) Europäisches Patentamt
European Patent Office
Office européen des brevets

(11) EP 2 840 104 A1

(12) EUROPÄISCHE PATENTANMELDUNG

(43) Veröffentlichungstag:
**25.02.2015 Patentblatt 2015/09**

(51) Int Cl.:
***C08G 65/22*** $^{(2006.01)}$ ***C08G 18/50*** $^{(2006.01)}$
***C08G 65/333*** $^{(2006.01)}$ ***C08G 65/336*** $^{(2006.01)}$

(21) Anmeldenummer: **14179646.6**

(22) Anmeldetag: **04.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.08.2013 DE 102013216751**

(71) Anmelder: **Evonik Industries AG**
**45128 Essen (DE)**

(72) Erfinder:
- **Ferenz, Michael**
  **45147 Essen (DE)**
- **Lobert, Matthias**
  **45309 Essen (DE)**
- **Schubert, Frank**
  **47506 Neukirchen-Vluyn (DE)**
- **Lewin, Anke**
  **40215 Düsseldorf (DE)**
- **Zellmer, Volker**
  **46240 Bottrop (DE)**
- **Knott, Wilfried**
  **45355 Essen (DE)**
- **Roessing, Melanie**
  **. (DE)**

(54) **Modifizierte Alkoxylierungsprodukte, die Alkoxysilylgruppen aufweisen und Urethangruppen enthalten und deren Verwendung**

(57) Die Erfindung betrifft Alkoxylierungsprodukte, deren Herstellung, Zusammensetzungen enthaltend die erfindungsgemäßen Alkoxylierungsprodukte, sowie deren Verwendung als oder zur Herstellung von Kleb- und Dichtstoffen.

EP 2 840 104 A1

## Beschreibung

Die Erfindung betrifft Alkoxylierungsprodukte, deren Herstellung, Zusammensetzungen enthaltend die erfindungsgemäßen Alkoxylierungsprodukte, sowie deren Verwendung als oder zur Herstellung von Kleb- und Dichtstoffen.

Konventionelle Polyetheralkohole, oft auch kurz als Polyether bezeichnet und vorwiegend aus Propylenoxid und Ethylenoxid aufgebaut, sind seit langem bekannt und werden in großen Mengen technisch hergestellt. Sie dienen unter anderem durch Umsetzung mit Polyisocyanaten als Ausgangsverbindungen zur Herstellung von Polyurethanen oder aber auch zur Herstellung von Tensiden.

Organische Alkoxysilanverbindungen wie 3-Glycidyloxy-propyltrimethoxy- bzw. - triethoxy-silan, die z.B. unter den Handelsnamen DYNASYLAN® GLYMO bzw. DYNASYLAN® GLYEO (Warenzeichen der Evonik Degussa GmbH) erhältlich sind, nehmen Eingang in die Herstellung von organisch modifizierten Netzwerken beim Sol-Gel-Verfahren, das als Schlüsselprozess zur Herstellung von Nanocompositen dient, die Beschichtungssysteme mit verbesserten Eigenschaften im Hinblick auf Härte, Kratz- und Abriebfestigkeit, Temperaturresistenz sowie Lösemittel- und Säurebeständigkeit liefern. Alkoxysilanverbindungen finden des Weiteren vielfältigen Eingang in Dicht- und Klebstoffe sowie generell als reaktive Haftvermittler und Primer für verschiedene Substrate wie Metalle, Glas und Glasfasern/Glasgewebe für faserverstärkte Verbundwerkstoffe und zur Oberflächenbehandlung von z.B. Pigmenten und Füllstoffen in Lacken.

Es hat nicht an Anstrengungen gefehlt, die Eigenschaftsprofile von Alkoxysilanverbindungen durch chemische Modifizierungen zu verbessern, um noch weitere Anwendungsgebiete für diese bedeutsame Produktklasse zu erschließen. So ist aus der Literatur bekannt, das Eigenschaftsprofil von Alkoxylierungsprodukten (Polyethern) mit denen von vernetzbaren, speziell Alkoxysilylgruppen tragenden Verbindungen zu kombinieren. So stellt die DE 69831518 T2 u.a. auf die Modifizierung von Polyetheralkoholen mit z.B. Isocyanatgruppen tragenden Alkoxysilanen unter urethanisierender Verknüpfung ab. Des Weiteren wird zur Alkoxysilyl-Modifizierung auch die hydrosilylierende Anbindung von Alkoxymonohydridosilanen an zuvor mit olefinisch ungesättigten Endgruppen modifizierten Polyetherolen gewählt.

Die Schriften JP 09012863, JP 09012861 und JP 07062222 beanspruchen ein Verfahren zur Herstellung von ausschließlich terminal mit hydrolysierbaren Trialkoxysilylfunktionen ausgerüsteten Polyetherolen, z.B. Glycerinpolyetherolen, die zunächst via DMC-Katalyse hergestellt, dann durch Zugabe von Alkalialkoholat und Allylchlorid in die entsprechenden Allylether und anschließend durch Platinmetall katalysierte Hydrosilylierung zu den Alkoxysilyl-terminierten Zielprodukten umgesetzt werden.

Alle im Stand der Technik beschriebenen Verfahren eignen sich somit nur zur Herstellung von ausschließlich terminal mit Trialkoxysilylgruppen modifizierten Polyoxyalkylenverbindungen und keinesfalls zur einfachen und/oder mehrfachen Modifizierung von Polyetherketten mit Trialkoxyfunktionen auch innerhalb der Sequenz von Oxyalkyleneinheiten.

Nach der EP 2 093 244 konnten erstmals Alkoxysilylgruppen tragende Alkoxylierungsprodukte hergestellt werden, die sich dadurch auszeichnen, dass im Gegensatz zum bis dahin bekannten Stand der Technik die Alkoxysilylgruppen entlang der Polyetherkette blockartig oder statistisch verteilt sind und nicht nur an den Termini der Kette lokalisiert sind. Weiterhin zeichnen sich diese Verbindungen durch eine reaktionsbedingt endständige OH-Gruppe aus.

Aus dem Vorhandensein der OH-Gruppe und den hydrolyseempfindlichen Alkoxysilylgruppen in einem Molekül rührt die intrinsische Reaktivität der Verbindungen und leichte Vernetzbarkeit unter Bildung dreidimensionaler polymerer Netzwerke her. Allerdings haben Versuche auch gezeigt, dass die Reaktivität der OH-Gruppe gegebenenfalls zu hoch liegt.

Die DE 10 2010 038774 beschreibt nichthydroxylierte alkoxysilylgruppenhaltige Polymere bestehend aus Polyetherblöcken und Urethaneinheiten. Die Verfahrensprodukte weisen eine unzureichende Bruchspannung auf.

Aufgabe der vorliegenden Anmeldeschrift ist daher die Bereitstellung von Verbindungen, die nach ihrer Aushärtung eine erhöhte Bruchspannung gegenüber Alkoxysilylgruppenhaltigen Polymeren des Standes der Technik aufweisen.

Eine weitere Aufgabe bestand in der Bereitstellung von Verbindungen, welche härtbaren Zusammensetzungen eine gute Lagerstabilität verleihen.

### Beschreibung der Erfindung:

Überraschenderweise wurde gefunden, dass Verbindungen enthaltend die Umsetzungsprodukte mit mehrfach funktionellen Isocyanaten wie nachfolgend definiert diese Aufgaben lösen.

Gegenstand der vorliegenden Erfindung sind deshalb Alkoxylierungsprodukte wie in den Ansprüchen und der nachfolgenden Beschreibung beschrieben.

Ein weiterer Gegenstand der vorliegenden Erfindung ist ein Verfahren zur Herstellung von erfindungsgemäßen Alkoxylierungsprodukten. In einem bevorzugten Verfahren werden in einem ersten Umsetzungsschritt (a) Polyether $(HD^A)_tD^x$ mit Diisocyanaten umgesetzt und in einem zweiten Reaktionsschritt (b) das Produkt und/oder das Produktgemisch des ersten Umsetzungsschrittes (a) mit einem Molekül der Formel H-M umgesetzt. Polyether $(HD^A)_tD^x$, Diisocy-

anate und Moleküle der Formel H-M werden nachfolgend definiert. H steht für Wasserstoff.

Ebenfalls Gegenstand der vorliegenden Erfindung sind Zusammensetzungen enthaltend mindestens eines der erfindungsgemäßen Alkoxylierungsprodukte allein oder in Mischungen mit weiteren, gegebenenfalls härtbaren Substanzen.

Ein weiterer Gegenstand der vorliegenden Erfindung ist die Verwendung der erfindungsgemäßen Alkoxylierungsprodukte, sowie der Produkte des erfindungsgemäßen Verfahrens, sowie der erfindungsgemäßen Zusammensetzungen enthaltend die erfindungsgemäßen Alkoxylierungsprodukte.

Ein Vorteil der Erfindung ist, dass die erfindungsgemäßen Alkoxylierungsprodukte, sowie Produkte des erfindungsgemäßen Verfahrens ausgezeichnet lagerstabil sind. Ebenfalls vorteilhaft ist, dass die erfindungsgemäßen Zusammensetzungen enthaltend die erfindungsgemäßen Alkoxylierungsprodukte, sowie Produkte des erfindungsgemäßen Verfahrens nach Zusatz eines Härtungskatalysators unter Wasser- und/oder Feuchtigkeitsausschluss hervorragend lagerstabil sind.

Ein weiterer Vorteil der Erfindung ist, dass die erfindungsgemäßen Alkoxylierungsprodukte, sowie Produkte des erfindungsgemäßen Verfahrens keine toxischen Substanzen emittieren.

Die erfindungsgemäßen Alkoxylierungsprodukte, die Produkte des erfindungsgemäßen Verfahrens, die erfindungsgemäßen Verfahren zur Herstellung der Zusammensetzungen, sowie deren erfindungsgemäße Verwendung, werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend oder vorhergehend Gehaltsangaben (ppm oder %) gemacht, so handelt es sich, wenn nicht anders angegeben, um Angaben in Gewichts-% oder Gewichts-ppm (wppm). Bei Zusammensetzungen beziehen sich die Gehaltsangaben wenn nicht anders angegeben auf die Gesamtzusammensetzung. Werden nachfolgend Mittelwerte angegeben, so handelt es sich, wenn nicht anders angegeben, um Zahlenmittel. Werden Molmassen verwendet, handelt es sich, wenn nicht ausdrücklich anders vermerkt um gewichtsmittlere Molmassen Mw mit der Einheit g/mol. Werden nachfolgend Messwerte angegeben, so wurden diese Messwerte, wenn nicht anders angegeben, bei einem Druck von 1013,25 hPa und einer Temperatur von 25°C ermittelt.

Die nachfolgenden Definitionen enthalten mitunter weitere Begriffe, die äquivalent und synonym zu dem definierten Begriff verwendet werden.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Isomere sind dem Fachmann bekannt, in besonderer Weise wird auf die Definitionen von Prof. Kazmaier der Universität des Saarlandes verwiesen, z.B. http://www.uni-saarland.de/fak8/kazmaier/PDF_files/vorlesungen/Stereochemie%20Strassb%20Vorla ge.pdf.

Sofern im Umfang dieser Erfindung auf Naturstoffe Bezug genommen wird, z.B. Lactat, sind grundsätzlich alle Isomeren damit gemeint, bevorzugt sind die jeweils in der Natur vorkommenden Isomere, im hier genannten Falle also das L-Lactat.

Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Die verschiedenen Fragmente in den nachfolgenden Formeln (Ia) und (II) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Die Formeln (I), (Ia) und (II), beschreiben Polymere, die eine Molgewichtsverteilung aufweisen. Daher stellen die Indizes das numerische Mittel über alle Monomereinheiten dar.

Die in den Formeln verwendeten Indexzahlen a, b, c, d, e, f, g, h, i, j, k, l, m, n, o, p, q, r, s, t, u und v sowie die

Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (Ia) und (II).

Die erfindungsgemäßen Alkoxylierungsprodukte, die die Strukturelemente der Formel (I) enthalten

$$M_i\, D_j\, T_k\, Q_l\, UR_u\, AP_v \qquad \text{Formel (I)}$$

zeichnen sich dadurch aus, dass die Fragmente M, D, T, Q nicht untereinander, sondern über die Gruppen UR und/oder AP miteinander verknüpft sind, und die Gruppen UR und AP nicht untereinander verknüpft sind, sondern dementsprechend über die Fragmente D, T oder Q miteinander verknüpft sind.

Die Indices sind

i = 1 bis 16, bevorzugt 2 bis 14, besonders bevorzugt größer 2 bis 12,

j = 0 bis 10, bevorzugt 0,5 bis 8, weiter bevorzugt 1 bis 6, besonders bevorzugt 1,2 bis 4, bevorzugt auch größer, gleich 2

k = 0 bis 6, bevorzugt größer 0 bis 4, insbesondere 0,5 bis 2,

l = 0 bis 4, bevorzugt größer 0 bis 3, insbesondere 0,5 bis 2,

bevorzugt ist j + k größer 0 besonders bevorzugt ist j + k größer gleich 1 insbesondere bevorzugt ist j + k größer gleich 2,

u = 1 bis 17, bevorzugt 1 bis 15, besonders bevorzugt größer gleich 2 bis 112, mehr bevorzugt 2,5 bis 10 und insbesondere bevorzugt 3 bis 8,

v = 0 bis 6, bevorzugt größer 0 bis 4, insbesondere 0,1 bis 2.

M sind unabhängig voneinander gleiche oder verschiedene Reste aus der Gruppe:

a) -NH-$R^{12}$ (Formel IVa),

b) -$NR^{12}_2$ (Formel IVb),

c) -$OR^{12}$ (Formel IVc) und

d)

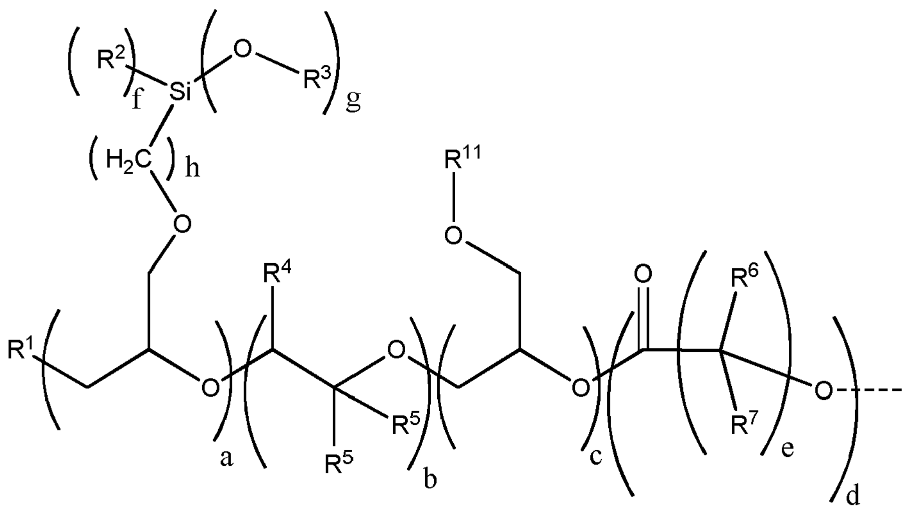

Formel (Ia)

mit der Maßgabe, dass mindestens 10 mol% der Reste M, bezogen auf die Gesamtmenge der Reste M, -NH-$R^{12}$ der Formel IVa und/oder -$NR^{12}_2$ der Formel IVb sind. Bevorzugt sind mindestens 25 mol-% der Rest M, bezogen auf die Gesamtmenge der Reste M, -NH-$R^{12}$ und/oder -$NR^{12}_2$, insbesondere bevorzugt sind mindestens 51 mol-% der Rest M, bezogen auf die Gesamtmenge der Reste M, -NH-$R^{12}$ und/oder - $NR^{12}_2$,

wobei für die Formeln IVa, IVb und IVc gilt:

$R^{12}$ der Formeln IVa, IVb und IVc sind unabhängig voneinander gleiche oder verschiedene, gegebenenfalls substituierte Kohlenwasserstoffreste, die durch Heteroatome unterbrochen sind oder

gegebenenfalls substituierte Kohlenwasserstoffreste mit 1 bis 30 C-Atomen, bevorzugt ausgewählt aus Alkyl-, Alkylen-, Aryl und/oder Alkaryl-Resten, bevorzugt mit 1 bis 18, insbesondere bevorzugt mit 1 bis 12 C-Atomen.

Bevorzugt sind $R^{12}$ Kohlenwasserstoffreste mit 1 bis 18 C-Atomen oder Kohlenwasserstoffreste, die durch Heteroatome unterbrochen sind der allgemeinen Formel:

$$C_oH_{2o+1}\text{- (OCmH2m)n - }(OCH_2CH_2)_p\text{ - }(OCH_2CH(CH_3))_r\text{ -,}$$

mit
m = 3 bis 12,
n = 0 bis 50,
o = 1 bis 36, bevorzugt 2 bis 20, mehr bevorzugt 3 bis 16, beispielsweise auch 5 bis 16 oder 8 bis 11, insbesondere bevorzugt 4 bis 12,
p = 0 bis 50, bevorzugt größer 0 bis 30, weiter bevorzugt 1 bis 20 und insbesondere bevorzugt 0 bis 10
r = 1 bis 40, bevorzugt 3 bis 30, insbesondere 4 bis 20,

Reste der Formel IVa, b und/oder c sind besonders bevorzugt ein Kohlenwasserstoffrest der Formel

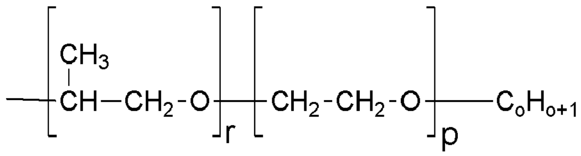

mit

o, p und r wie zuvor definiert und
mehr bevorzugt ist der Kohlenwasserstoffrest ein Polyether bestehend aus Butanol gestartetem Polypropylenoxid, ganz besonders bevorzugt ist $R^{12}$ ein Polypropylenoxid der Formel $C_4H_9O[CH_2CH(CH_3)O]_3$ bis $_{10}$, insbesondere bevorzugt der Formel $C_4H_9O[CH_2CH(CH_3)O]_{5\text{ bis }6}$;
Besonders bevorzugt sind die Reste mit M gemäß Formeln (IVa) oder (IVb) ausgewählt aus den Resten der folgenden Amine, die in der aufgelisteten Form der Formel H-M, also H-NH-$R^{12}$ gemäß Formel (IVa) oder H-$NR^{12}_2$ gemäß Formel (IVb), entsprechen: Ethylamin, Diethylamin, Propylamin, Dipropylamin, Butylamin, Dibutylamin, Dicyclohexylamin, Dihexylamin, 2-Ethylhexylamin, Di-2-(ethylhexyl)amin, Ditridecylamin, Anilin, 1-Phenylethylamin, 2,6-Xyliden, 2-Phenylethylamin, Benzylamin, Toluidin, 2-Methoxyethylamin, 3-Methoxypropylamin, Di-(2-methoxyethyl)amin, 2-(Diethylamino)ethylamin, 3-(Dimethylamino)-1-propylamin, Bis-[(3-dimethylamino)propyl]amin, N-(3-Aminopropyl)imidazol oder deren Isomeren und Polyetheramine, die zum Beispiel unter dem Namen Jeffamin vertrieben werden, wie zum Beispiel Jeffamin ® M 2070.
Besonders bevorzugt sind die Reste mit M gemäß Formeln (IVc) ausgewählt aus den Resten der folgenden Alkohole, die in der aufgelisteten Form der Formel H-M, also H-$OR^{12}$ gemäß Formeln (IVc) entsprechen: Allylalkohol, 2-Allyloxyethanol, Vinylalkohol, Ethanol, sowie alle Isomeren des Propanols, Butanols, Pentanols, Hexanols, Heptanols, Octanols und Nonanols, zudem Caprinalkohol, 1-Undecanol, Laurylalkohol, 1-Tridecanol, Isotridecylalkohol, Myristylalkohol, 1-Pentadecanol, Cetylalkohol, Palmoleylalkohol, 1-Heptadecanol, Stearylalkohol, Isostearylalkohol, Oleylalkohol, Elaidylalkohol, Petroselinylalkohol, Linolylalkohol, Linolenylalkohol, 1-Nonadecanol, Elaeostearylalkohol, Arachylalkohol, 1-Heneicosanol, Gadoleylalkohol, Behenylalkohol, Erucylalkohol und Brassidylalkohol sowie deren technische Mischungen, die Verbindungsklasse der Oxoalkohole, die meist 2 bis 4 Methylgruppen als Verzweigungen tragen, so genannte Guerbetalkohole, die in 2-Stellung mit einer Alkylgruppe verzweigt sind, beispielsweise 2-Ethylhexanol, 2-Butyloctanol, 2-Hexyldecanol und/oder 2-Octyldodecanol, des Weiteren Cyclopentanol, 1-Methylcyclopentanol, Cyclohexanol, Furfurylalkohol, Solketal so wie jegliche mono-OH-terminale Polyether bzw. Polyalkylenoxide wie z. B. Methyl- oder Butyl-gestartete Polyethylen- oder Polypropylenoxide bzw. deren Mischoxide. Besonders bevorzugt werden Butanol, 2-Ethylhexanol, Nonanol, iso-Nonanol, 3,5,5-Trimethylhexanol, Decanol und Isotridecylalkohol oder ein Polyether bestehend aus Butanol gestartetem Polypropylenoxid, besonders bevorzugt entspricht M $C_4H_9O[CH_2CH(CH_3)O]_3$ bis $_8$, insbesondere bevorzugt mit M entspricht $C_4H_9O[CH_2CH(CH_3)O]_{5\text{ bis }6}$- eingesetzt.

und wobei für die Formeln (la) gilt:

a = 0 bis 1000 ist, bevorzugt größer 0 bis 100, weiter bevorzugt 1 bis 50, insbesondere bevorzugt 0 bis 5, b = 0 bis 1000, bevorzugt 1 bis 800, weiter bevorzugt 2 bis 500, insbesondere bevorzugt 3 bis 400,
c = 0 bis 1000, bevorzugt größer 0 bis 100, weiter bevorzugt 1 bis 50, insbesondere bevorzugt 0 bis 5, insbesondere 0,
d = 0 bis 1000, bevorzugt größer 0 bis 100, weiter bevorzugt 1 bis 50, insbesondere bevorzugt 0 bis 5, insbesondere 0,
mit der Maßgabe, dass die Gruppen mit den Indices a, b, c und d frei permutierbar über die Molekülkette sind,

e = 1 bis 10,
g + f = 3 und g mindestens gleich 1 ist,
h = 0 bis 10, bevorzugt 1 bis 10, insbesondere bevorzugt 3
und mit der Maßgabe, dass die verschiedenen Monomereinheiten sowohl der Fragmente mit den Indices a, b, c, und d als auch gegebenenfalls der Polyoxyalkylenkette des Substituenten $R^1$ untereinander blockweise aufgebaut sein können oder aber einer statistischen Verteilung unterliegen und zudem untereinander frei permutierbar sind, und wobei
$R^1$ = unabhängig voneinander ein gesättigter oder ungesättigter, linearer oder
verzweigter organischer Kohlenwasserstoffrest ist, der als Heteroatome O, S und / oder N enthalten kann, bevorzugt mit 4 bis 400 C-Atomen, weiter bevorzugt ein Kohlenwasserstoffrest, der durch Heteroatome unterbrochen ist, der allgemeinen Formel:

$$C_oH_{2o+1}\text{-O-}(C_mH_{2m}\text{-O})_n\text{ - }(CH_2CH_2\text{-O-})_p\text{ - }(CH_2CH(CH_3)O)_r\text{ -,}$$

mit

m = 3 bis 12,
n = 0 bis 50,
o = 1 bis 36, bevorzugt 2 bis 20, mehr bevorzugt 3 bis 16, beispielsweise auch 5 bis 16 oder 8 bis 11, insbesondere bevorzugt 4 bis 12,
p = 0 bis 50, bevorzugt größer 0 bis 30, weiter bevorzugt 1 bis 20 und insbesondere bevorzugt 0 bis 10
r = 1 bis 40, bevorzugt 3 bis 30, insbesondere 4 bis 20,
$R^2$ = unabhängig voneinander eine Alkylgruppe mit 1 bis 8 Kohlenstoffatomen, insbesondere Methyl- oder Ethyl-,
$R^3$ = unabhängig voneinander eine Alkylgruppe mit 1 bis 8 Kohlenstoffatomen, insbesondere Methyl-, Ethyl-, Propyl-, Isopropyl-,
$R^4$ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
$R^5$ = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl, Ethyl, Octyl, Decyl, Dodecyl, Phenyl, Benzyl, besonders bevorzugt Wasserstoff, Methyl oder Ethyl,
oder $R^4$ und einer der Reste $R^5$ können gemeinsam einen Ring bilden, der die Atome, an die $R^4$ und $R^5$ gebunden sind, einschließt, bevorzugt enthält dieser Ring 5 bis 8 Kohlenstoffatome,
ganz besonders bevorzugt sind $R^4$ und einer der Reste $R^5$ Wasserstoff und der zweite Rest und $R^5$ Wasserstoff, Methyl oder Ethyl,
$R^6$ und $R^7$ = unabhängig voneinander gleich $R^5$ und/oder Alkoxy-, bevorzugt Methylgruppen,
$R^{11}$ = unabhängig voneinander eine gesättigte oder ungesättigte Alkylgruppe mit 1 bis 24 Kohlenstoffatomen, bevorzugt 1 bis 14 Kohlenstoffatomen ist, deren Kette durch Sauerstoff unterbrochen sein kann und weiter funktionelle Gruppen tragen kann wie z.B. Carboxylgruppen gegebenenfalls mit Alkoholen wie z.B. Methanol, Ethanol, Propanol, Butanol oder Hexanol verestert, Hydroxygruppen gegebenenfalls. mit Säuren wie Essigsäure, Buttersäure oder (Meth)Acrylsäure bzw. den Polymerisaten der (Meth)Acrylsäure verestert, oder eine Arylgruppe mit 6 bis 20 Kohlenstoffatomen, oder eine Alkarylgruppe mit 7 bis 30, bevorzugt 7 bis 20 Kohlenstoffatomen, bevorzugt eine Methyl-, Ethyl-, Hexyl-, Octyl-, 2-Ethylhexyl-, Phenyl-, Kresyl-, tert-Butylphenyl- oder Benzylgruppe oder/und eine Allylgruppe oder ein (Poly)(meth)acrylsäureester ist, besonders bevorzugt handelt es sich um eine 2-Ethylhexylgruppe oder eine tert-Butylphenyl- oder Benzylgruppe;

Die Fragmente D, T und Q können auch folgendermaßen beschrieben werden:

D ist ein Polyetherrest $-(D^A)_tD^X$ mit t gleich 2,
T ist ein Polyetherrest $-(D^A)_tD^x$ mit t gleich 3 und
Q ist ein Polyetherrest $-(D^A)_tD^X$ mit t gleich 4,
mit

$D^X$ ein t-valenter funktioneller, gesättigter oder ungesättigter, linearer oder verzweigter organischer Kohlenwasserstoffrest ist, der als Heteroatome O, S, Si und / oder N enthalten kann, wobei jeder der Reste $D^A$ kovalent an den Rest $D^X$ gebunden ist,
bevorzugt enthält der Kohlenwasserstoffrest 8 bis 1500, weiter bevozugt 20 bis 1000, insbesondere bevorzugt

80 bis 300 Kohlenstoffatome,
bevorzugt ist die Kohlenstoffkette des Kohlenwasserstoffrestes durch Sauerstoffatome unterbrochen,
bevorzugt enthält der Kohlenwasserstoffrest Siliziumatom-haltige Substituenten, bevorzugt sind die Siliziumatom-haltigen Substituenten Alkoxysilylgruppen, bevorzugt ist der von Sauerstoffatomen unterbrochene Kohlenwasserstoffrest ein Polyoxyalkylenrest, Polyetherrest und/oder Polyetheralkoxyrest,
oder $D^X$ kann eine einfach oder mehrfach annelierte phenolische Gruppe sein, oder besonders bevorzugt kann $D^X$ ein t-valenter Rest von einem t-fach hydroxyliertem Alkohol, Polyetherol, Polyesterol, Siloxan, perfluorierten Polyetherol, (poly)-Urethan oder Saccharid, bevorzugt OH-funktionelle Polyether, Polyester, Polycarbonate, Polyetherester oder perfluorierten Polyether und Mischpolymere daraus, insbesondere bevorzugt OH-funktionelle Polyether oder Polyester, bevorzugt Polyether, sein, wobei $-D^X$ insgesamt aus mindestens 3 Monomereinheiten besteht, die zum Aufbau der oben genannten Polymere dienen,

und wobei $D^A$ ein Fragment der Formel (II)

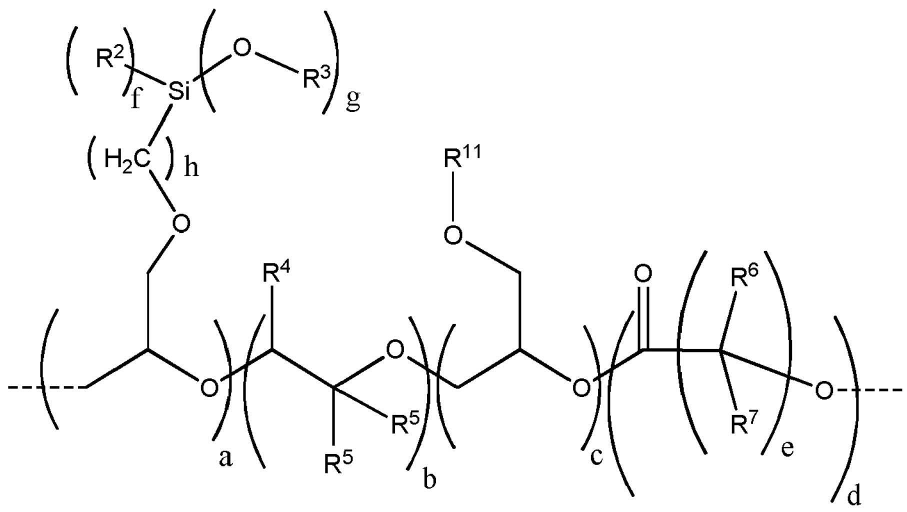

Formel (II)

ist, mit a bis h und $R^2$ bis $R^7$ und $R^{11}$ definiert wie in Formal (Ia) und mit der Maßgabe, dass die Summe aller Indices b der Formeln (Ia) und (II) mindestens 1, bevorzugt mindestens 2, insbesondere bevorzugt mindestens 3 ergibt und die Summe aller Indices a der Formeln (Ia) und (II) mindestens 1, bevorzugt mindestens 2, insbesondere bevorzugt mindestens größer gleich 3 ergibt.

Damit können die Polyetherreste D mit einer dihydroxy substituierten Verbindung gestartete Polyether sein. Die Polyetherreste T können ein mit einer trihydroxy substituierten Verbindung gestarteter Polyether sein. Die Polyetherreste Q können mit einer tetrahydroxy substituierten Verbindung gestartete Polyether sein. Das Fragment M kann ein mit einer monohydroxy substituierten Verbindung gestarteter Polyether sein.

UR sind unabhängig voneinander gleiche oder verschiedene divalente Reste der Form $-U-D^C-U-$, wobei U eine -C(O)-NH-Gruppe ist, die über den Stickstoff an $D^C$ gebunden ist, wobei $D^C$ ein divalenter substituierter oder unsubstituierter Kohlenwasserstoffrest ist,
bevorzugt ist $D^C$ ein Kohlenwasserstoffrest mit 6 - 30 Kohlenstoffatomen, insbesondere bevorzugt ist $D^C$ gleich ein Isophoronrest.

AP sind unabhängig voneinander gleiche oder verschiedene Reste der allgemeinen Formel (IIIa) oder (IIIb)

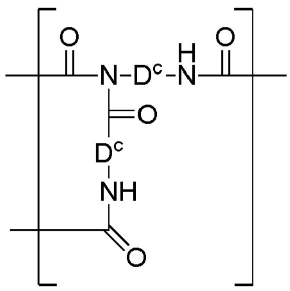

(IIIa)

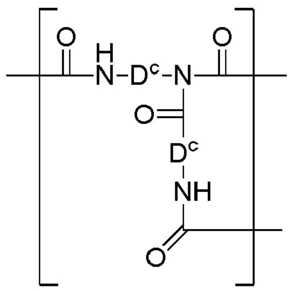

(IIIb)

Das Fragment UR kann als Urethanbrücke bezeichnet werden. Das Fragment AP kann als Allophanatbrücke bezeichnet werden.

Der Rest $R^{11}$ kann weitere funktionelle Gruppen tragen wie z.B. (Meth)Acrylsäure bzw. Polymerisate der (Meth)Acrylsäure. Es können also gegebenenfalls vorhandene Hydroxygruppen mit Acrylsäure oder/und Methacrylsäure verestert sein. Die Doppelbindungen der (Meth)Acrylsäure sind polymerisierbar, z.B. radikalisch z.B. UV induziert.

Die Polymerisation der (Meth)Acrylgruppen kann nach der Herstellung des Polyethers geschehen. Sie kann auch mit den erfindungsgemäßen Alkoxylierungsprodukten, mit den Produkten des erfindungsgemäßen Verfahrens, wie auch nach der erfindungsgemäßen Verwendung durchgeführt werden.

$D^X$ ist ein t-valenter funktioneller, organischer Kohlenwasserstoffrest. Die Funktionalität zeichnet sich dadurch aus, dass sie in der Lage ist, eine Polymerisation von Alkylenoxiden unter Ringöffnung, von Säureestern unter Umesterung und/oder von Säurelactonen unter Ringöffnung einzuleiten. Sie stellt in diesem Sinne eine Startverbindung dar. Die Polymerisation kann gegebenenfalls katalytisch erfolgen. Als Katalysatoren können Säuren, Basen und Metallatom haltige Komplexe dienen. Bevorzugt werden sogenannte DMC-Katalysatoren eingesetzt. Dabei gelten die dem Fachmann bekannten gängigen Additionsregeln, beispielsweise dass der Starter bevorzugt an der niedriger substituierten Seite der Alkylenoxide oder an dem Carbonyl-Kohlenstoff der Lactone reagiert. Dies entspricht im Fall der Formel (II) der linken Seite der Formel.

Die OH-Funktionen der Polyether reagieren mit den Isocyanat-Funktionen zu Urethanen. Bei dieser Reaktion treten in der Regel eine Reihe von Nebenreaktionen (z.B. Addition einer Isocyanat-Gruppe an eine Urethan-Einheit zur Allophanat-Gruppe) deren Ausmaß durch die Wahl der Reaktionsbedingungen gesteuert werden kann.

Bevorzugt sind erfindungsgemäße Alkoxylierungsprodukte der Formel (I), in denen die Indices k und l null sind. Besonders bevorzugt sind Alkoxylierungsprodukte/Polymerisate der Polyether $(HD^A)_tD^x$ die dihydroxyfunktionell sind. Besonders bevorzugt sind divalente Polyether $(HD^A)_tD^x$ die aus 3-Glycidyloxypropyltriethoxysilan (GLYEO) und Propylenoxid (PO) und optional weiterhin Ethylenoxid (EO) und/oder Glycidylether und/oder Lacton hergestellt wurden. Insbesondere bevorzugt sind dihydroxyfunktionelle Polyether $(HD^A)_tD^x$, die ausschließlich aus GLYEO und PO oder die ausschließlich aus GLYEO und PO und EO hergestellt wurden. Der Starter $D^X$ ist bevorzugt ein Polypropylenglycol.

Besonders bevorzugt sind erfindungsgemäße Alkoxylierungsprodukte der Formel (I), in denen das Fragment M keine Alkoxysilyl- und/oder Alkylsilylgruppen aufweist.

Weiterhin besonders bevorzugt sind erfindungsgemäße Alkoxylierungsprodukte, die bezogen auf das individuelle Molekül, im numerischen Mittel mehr als eine Alkoxysilylgruppe pro Gruppe UR aufweisen.

Weiterhin bevorzugt sind erfindungsgemäße Alkoxylierungsprodukte der Formel (I), in denen k, l, v = null sind. Weiterhin bevorzugt sind Alkoxylierungsprodukte, in denen der Index i gleich 2, der Index j gleich 2 bis 3 und der Index u gleich 3 bis 4 ist.

Bevorzugt sind erfindungsgemäße Alkoxylierungsprodukteder Formel (I), in denen die Indices i und j unabhängig voneinander 1, 2, 3 oder 4 und u = (j - 1) bis (j + 1) betragen, sowie k und l null sind. Insbesondere bevorzugt sind erfindungsgemäße Alkoxylierungsprodukte der Formel (I), in denen der Index a bevorzugt größer gleich 1 und/oder b in Summe größer gleich 2, bevorzugt 8 bis 400, besonders bevorzugt 10 bis 300 ist und/oder erfindungsgemäße Alkoxylierungsprodukte der Formel (I) in denen weitere der nachfolgend angeführten, bevorzugten Parameter erfüllt sind: Bevorzugt sind Alkoxylierungsprodukte der Formel (I) wobei die Indices der Formel (I) k und l = 0, j = 0 bis 2, i = 2, u = j + 1 und v = 0 und die Indices der Formeln (Ia) und (II) a in Summe größer gleich 1 und b in Summe 2 bis 300 ist. Bevorzugt sind auch Alkoxylierungsprodukte der Formel (I), wobei die Indices der Formel (I) i und j = 0 und k + l ≥ 1 und die Indices der Formeln (Ia) und (II) a in Summe größer gleich 1 und b in Summe 2 bis 300 sind. Weiterhin bevorzugt sind Alkoxylierungsprodukte der Formel (I), wobei mindestens ein Alkoxylierungsprodukt der Formel (I) mit jeweils unabhängig voneinander i, j, k oder l gleich 1 und v und u = 0 vorhanden ist. Zudem bevorzugt sind Alkoxylierungsprodukte der Formel (I), wobei die Indices der Formel (I) j, k, l und v = 0, i = 3 bis 4 und u = 1 sind. Die erfindungsgemäßen Alkoxylierungsprodukte der Formel (I), und insbesondere, die vorab aufgezählten bevorzugten Ausführungsformen der

Alkoxylierungsprodukte zeichnen sich dadurch aus, dass diese Alkoxylierungsprodukte der Formel (I) mit mindestens 10 mol-% der Reste M, bezogen auf die Gesamtmenge der Reste M, gemäß $-NH-R^{12}$ der Formel (IVa) und/oder $-NR^{12}_2$ der Formel (IVb), oder mindestens 25 mol-%, oder mindestens 51 mol-% der Reste M, bezogen auf die Gesamtmenge der Reste M, $-NH-R^{12}$ und/oder $-NR^{12}_2$ eine deutlich verbesserte Bruchspannung aufweisen und härtbare Zusammensetzungen enthaltend diese Alkoxylierungsprodukte der Formel (I) wesentlich lagerstabiler sind, gegenüber dem ansonsten gleichen Alkoxylierungsprodukt ohne die Reste M der Formeln (IVa) und/oder (IVb) beziehungsweise der ansonsten gleichen Zusammensetzung damit.

In der EP 2 093 244 wird beschrieben, dass man Epoxidfunktionen tragende Alkoxysilane in vorteilhafter Weise in Gegenwart bekannter Doppelmetallcyanidkatalysatoren selektiv alkoxylieren kann. Mit dem dort beanspruchten Verfahren erschließt sich die Möglichkeit, in reproduzierbarer Weise die ein- und/oder mehrfache Alkoxysilylgruppen-Modifizierung von Polyoxyalkylenverbindungen nicht nur terminal, sondern auch innerhalb der Sequenz von Oxyalkyleneinheiten vorzunehmen. Die Offenbarung der EP 2 093 244 ist vollumfänglich als Teil und Bestandteil dieser Beschreibung anzusehen.

Bevorzugt sind die erfindungsgemäßen Produkte über ein Alkoxylierungsverfahren unter Verwendung von Doppelmetallcyanidkatalysatoren (DMC-Katalysatoren) erhältlich. Diese Katalysatoren sind in ihrer Herstellung und Verwendung als Alkoxylierungskatalysatoren seit den 1960er Jahren bekannt und werden zum Beispiel in US 3,427,256, US 3,427,334, US 3,427,335, US 3,278,457, US 3,278,458 oder US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Als Referenz sei weiterhin z. B. auf EP 1 017 738, US 5,777,177, EP 0 981 407, WO 2006/002807 und EP 1 474 464 verwiesen.

Einsetzbare Alkylenoxidverbindungen sind z.B. Ethylenoxid, 1,2-Epoxypropan (Propylenoxid), 1,2-Epoxy-2-methylpropan (Isobutylenoxid), Epichlorhydrin, 2,3-Epoxy-1-propanol, 1,2-Epoxybutan (Butylenoxid), 2,3-Epoxybutan, 1,2-Methyl-3-ethoxybutan, 1,2-Epoxypentan, 1,2-Epoxy-3-methylpentan, 1,2-Epoxyhexan, 1,2 Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxypropylmethylether, 2,3-Epoxypropylethylether, 2,3-Epoxypropylisopropylether, 2,3-Epoxy-1-propanol, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)propenoxid, 3-(Perfluoroethyl)propenoxid, 3-(Perfluorobutyl)propenoxid, 4-(2,3-Epoxypropy)morpholin, 1-(Oxiran-2-ylmethyl)pyrrolidin-2-on. Bevorzugt eingesetzt werden Ethylenoxid, Propylenoxid und Butylenoxid. Besonders bevorzugt werden Ethylenoxid und Propylenoxid eingesetzt.

Je nach verwendetem epoxidfunktionellem Alkoxysilan und evtl. eingesetzten weiteren Monomeren, können modifizierte Alkoxylierungsprodukte (II) hergestellt werden, sowie beliebig aufgebaute Gemische.

Eine nicht abschließende Sammlung von Epoxidgruppen-substituierten Alkoxysilanen, die allein oder in Mischungen miteinander oder in Kombination mit Epoxidverbindungen im Rahmen der Erfindung verwendet werden können, umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropylmethyl-dimethoxysilan, 3-Glycidyloxypropyl-ethyl-diethoxysilan. Diese Monomere können bevorzugt als Ausgangsverbindungen (Edukte) zur Herstellung von Strukturelementen mit dem Index (a) der Formeln (la) und (II) eingesetzt werden.

Unter den Verbindungen, die den Rest $R^1$ der Formel (la) liefern, werden im Rahmen der vorliegenden Erfindung Substanzen verstanden, die den Anfang (Start) des herzustellenden Alkoxylierungsprodukts, insbesondere der Formel (la), bilden, das durch die erfindungsgemäße Anlagerung von epoxidfunktionellen Monomeren der und evtl. weiteren Comonomeren erhalten wird. Die in dem erfindungsgemäßen Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol eingesetzt. Bevorzugt werden ein- bis vierwertige, besonders bevorzugt zweiwertige, Polyetheralkohole oder Alkohole eingesetzt

Als OH-funktionelle Startverbindungen $R^1$-H, wobei der Wasserstoff Teil der Hydroxygruppe ist, werden vorzugsweise Verbindungen mit Molmassen von 31 bis 10.000 g/mol, besonders bevorzugt 50 bis 2000 g/mol, insbesondere 60 bis 80 g/mol eingesetzt. Die Startverbindungen können in beliebigen Mischungen miteinander oder als Reinsubstanz eingesetzt werden. Es können auch seitenständig mit Alkoxysilylgruppen enthaltende Substituenten oder direkt mit Alkoxysilylgruppen substituierte Hydroxylverbindungen, wie die in EP 2093244 beschriebenen Silylpolyether als Startverbindungen eingesetzt werden.

Vorteilhaft werden niedermolekulare Polyetherole mit Molmassen von 50 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit OH-Funktionen. Hierzu gehören beispielsweise Phenol, Alkyl- und Arylphenole.

Als 2 bis 4-fach-OH-funktionelle Startverbindungen, z.B. der Formel $D^X$ mit t = 2 bis 4, werden vorzugsweise Verbindungen mit Molmassen von 62 bis 10.000 g/mol, bevorzugt 92 bis 7000 g/mol, besonders bevorzugt 122 bis 5000 g/mol und insbesondere bevorzugt 2000 bis 4000 g/mol eingesetzt. Die Startverbindungen können in beliebigen Mischungen miteinander oder als Reinsubstanz eingesetzt werden. Es können auch seitenständig Alkoxysilylgruppen enthaltende Substituenten oder direkt mit Alkoxysilylgruppen substituierte Hydroxylverbindungen, wie die in EP 2093244 beschriebenen Silylpolyether als Startverbindungen eingesetzt werden.

Vorteilhaft werden niedermolekulare Polyetherole mit Molmassen von 62 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit OH-Funktionen. Hierzu gehören beispielsweise Phenol, Alkyl- und Arylphenole oder auch Kohlenhydrate wie z.B. Saccharide, insbesondere eignen sich Bisphenol A und Novolake als Startverbindungen.

Die erfindungsgemäßen Alkoxylierungsprodukte können auf verschiedene Arten und Weisen erhalten werden. Vorzugsweise erfolgt die Herstellung der erfindungsgemäßen Alkoxylierungsprodukte nach dem nachfolgend beschriebenen erfindungsgemäßen Verfahren.

Bevorzugt erfolgt die Herstellung von Alkoxylierungsprodukten durch Umsetzung von OH-Gruppen tragenden Polyethern mit mehrfach funktionellen Isocyanaten und mit Verbindungen der Formel H-NH- $R^{12}_2$ gemäß Formel (IVa) und/oder H-$NR^{12}_2$ gemäß Formel (IVb). Unter mehrfach funktionellen Isocyanaten werden in Sinne dieser Erfindung alle Verbindungen verstanden, die mindestens zwei Isocyanatgruppen aufweisen. Besonders bevorzugt handelt es sich bei den mehrfach funktionellen Isocyanaten um Diisocyanate. Der Einsatz von mehrfach funktionellen Isocyanaten, ganz besonders von Diisocyanaten, hat den Vorteil, dass sie dem Alkoxylierungsprodukt der vorliegenden Erfindung besondere Flexibilität verleiht, insbesondere dadurch, dass sie eine nachträgliche Funktionalisierung ermöglicht, ohne das Eigenschaftsprofil des Alkoxylierungsproduktes negativ zu beeinflussen. Dies ist für den Fachmann vor allem deshalb überraschend, da die entstehenden Urethangruppen des Bausteins UR in Formel (I) dem Alkoxylierungsprodukt eine zusätzliche Möglichkeit bieten, intermolekulare Wasserstoffbrücken aufzubauen und so die physikalischen Eigenschaften, insbesondere die Viskosität des Alkoxylierungsproduktes negativ beeinflussen können. Überraschenderweise wurde gefunden, dass dies durch Einsatz einer Kombination aus mehrfach funktionellen Isocyanaten und Verbindungen der Formel H-NH- $R^{12}_2$ gemäß Formel (IVa) und/oder H-$NR^{12}_2$ gemäß Formel (IVb) verhindert werden kann. Erfindungsgemäße Produkte weisen ein verbessertes Eigenschaftsprofil auf, insbesondere werden hohe Zugscherfestigkeiten erzielt, und bieten gleichzeitig die Möglichkeit zur weiteren Funktionalisierung. Weiterhin bevorzugt sind Verfahren in welchen als Verbindungen der Formel H-NH- $R^{12}_2$ gemäß Formel (IVa) und/oder H-$NR^{12}_2$ gemäß Formel (IVb) mindestens eine Verbindung ausgewählt aus Ethylamin, Diethylamin, Propylamin, Dipropylamin, Butylamin, Dibutylamin, Dicyclohexylamin, Dihexylamin, 2-Ethylhexylamin, Di-2-(ethylhexyl)amin, Ditridecylamin, Anilin, 1-Phenylethylamin, 2,6-Xyliden, 2-Phenylethylamin, Benzylamin, Toluidin, 2-Methoxyethylamin, 3-Methoxypropylamin, Di-(2-methoxyethyl)amin, 2-(Diethylamino)ethylamin, 3-(Dimethylamino)-1-propylamin, Bis-[(3-dimethylamino)propyl]amin, N-(3-Aminopropyl)imidazol und Polyetheramin eingesetzt wird. Verfahren in denen solchen Verbindungen eingesetzt werden bringen Alkoxylierungsprodukte mit besonders guter Bruchspannung hervor und ergeben besonders stabile Zusammensetzungen.

Ein bevorzugtes Verfahren zur Herstellung der erfindungsgemäßen Alkoxylierungsprodukte zeichnet sich dadurch aus, dass in einem ersten Umsetzungsschritt (a) Polyether der Formel $(HD^A)_tD^X$ mit Diisocyanaten umgesetzt werden und in einem zweiten Umsetzungsschritt (b) das Produkt/Produktgemisch des ersten Umsetzungsschrittes (a) mit einem Molekül der Formel H-M umgesetzt werden. Die Polyether der Formel $(HD^A)_tD^X$ sind oben beschrieben. Die Moleküle der Formel H-M sind Verbindungen enthaltend Wasserstoff gebunden an das Fragment M, welches oben beschrieben ist.

Bevorzugt werden im erfindungsgemäßen Verfahren die Diisocyanate im molaren Überschuss gegenüber den Polyethern $(HD^A)_tD^X$ eingesetzt.

Weiterhin bevorzugt werden im erfindungsgemäßen Verfahren die Polyether $(HD^A)_tD^X$ so gewählt, dass im Produkt mehr Alkoxysilylgruppen als Guppen UR enthalten sind. In anderen Worten, bevorzugt ist die Summe der Strukturelemente mit dem Index (a) aus Formeln (Ia) und (II) größer als die Summe der Strukturelemente mit den Indices (u) und (v) aus Formel (I);

$$a > u + v.$$

Bevorzugt werden die beiden Umsetzungen (a) und (b) zeitlich voneinander getrennt durchgeführt. Dabei werden bevorzugt zunächst die Polyether $(HD^A)_tD^x$ mit den Diisocyanaten umgesetzt. In diesem Schritt bestimmen die stöchiometrischen Verhältnisse die Anzahl der UR-Fragmente im Produkt. Im zweiten Umsetzungsschritt (b) werden die nicht abreagierten Isocyanatgruppen mit dem Molekül H-M umgestetzt.

Die Umsetzung mit dem Molekül H-M entspricht einem Endcapping-Verfahren. Es wird mit diesem Umsetzungsschritt angestrebt, bevorzugt alle Isocyanatgruppen zur Abreaktion zu bringen.

Im erfindungsgemäßen Verfahren können di-funktionelle Isocyanate ausgewählt aus der Gruppe umfassend beispielsweise; Toluol-2,4-diisocyanat (TDI), Diphenylmethandiisocyanat oder Methylendiphenyldiisocyanat (MDI), Hexamethylendiisocyanat (HMDI), 2,2,4-Trimethylhexan-1,6-diisocyanat (TMDI), Polymeres Diphenylmethandiisocyanat (PMDI), Isophorondiisocyanat (IPDI), 4,4'-Diisocyanatodicyclohexylmethan (H12MDI), wobei die aliphatischen Produkte bevorzugt sind, und Isophorondiisocyanat (IPDI) besonders bevorzugt ist. Trifunktionelle Isocyanate die verwendet werden können, sind ausgewählt aus der Gruppe umfassend beispielsweise; Triphenylmethantriisocyanat, 1,3,5-Benzoltriisocyanat und 2,4,6-Toluoltriisocyanat verwendet werden.

Einige dieser Isocyanate weisen Stereozentren auf. Insbesondere wird auf die Isomere des Isophorons hingewiesen. Ausdrücklich sind alle denkbaren Isomere im Umfang dieser Erfindung eingeschlossen. So kann beispielsweise Isophorondiisocyanat in ein cis- und ein trans-Isomer unterschieden werden. Besonders bevorzugt ist Isophorondiisocyanat aus einem cis/trans Gemisch von 5:1 bis 1:5, bevorzugt 3:1 bis 1:3, weiter bevorzugt 1:1. Ein besonders bevorzugtes, kommerzielles Produkt besteht aus einem cis/trans Gemisch von 3:1. Der Einsatz von kommerziellem Isophorondiisocyanat ist bevorzugt. Isophorondiisocyanat ist auch unter anderen Bezeichnungen erhältlich, welche als Synonyma im Umfang dieser Erfindung eingeschlossen sind: 3-Isocyanatmethyl-3,5,5-trimethylcyclohexylisocyanat, 5-Isocyanato-1-(isocyanatomethyl)-1,3,3-trimethylcyclohexane, CAS-Nr: 4098-71-9. Es sind diverse Handelsnamen üblich, häufig enthalten sie den Namen des Stammmoleküls Isophoron, es sind jedoch auch andere Handelsnamen geläufig: z.B. Desmodur®I (BAYER), Isocur IPDI 22-200 (ISO-ELEKTRA), VESTANAT® IPDI (EVONIK INDUSTRIES), welche ebenfalls im Umfang der vorliegenden Erfindung eingeschlossen sind. Übliche Spezifikationen für Isophorondiisocyanat sind: Gesamtchlorgehalt <400 mg/kg, hydrolysierbares Chlor <200 mg/kg, Reinheit >99,5 Gew.-%, Brechungsindex $n^{25}_D$ 1,483 (DIN 51 423, Teil 2), NCO-Gehalt 37,5 - 37,8 Gew.-% (EN ISO 11 909 / ASTM D 2572), das kommerzielle Produkt wird als farblos bis leicht gelb beschrieben.

Isocyanate können oligomerisieren. Häufig enthalten kommerzielle Produkte mehr oder minder große Mengen derartiger Oligomerer. Diese können z.B. durch die folgenden Formeln beschrieben werden:

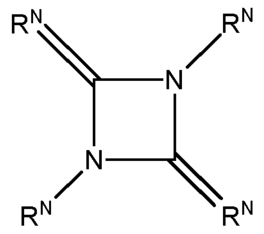

Dimer

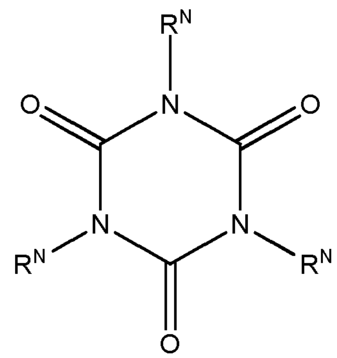

Trimer

$R^N$ bezeichnet den Rest des Isocyanates. Dem Fachmann ist es möglich aus den oben genannten Isocyanaten die hier gemeinten Strukturen abzuleiten. Die Dimere und Trimere sind als homo-Dimere bzw. homo-Trimere zu verstehen.

Im Falle der oben genannten Diisocyanate könnten hier Strukturen entstehen, die in der Lage sind als analoge Brückenelemente zu UR entsprechende Urethane zu enthalten, die direkt aus den gezeigten dimeren Diisocyanaten ableitbar sind.

Die trimeren Diisocyanate sind gegebenenfalls in der Lage mit mehr als zwei Polyethern $(HD^A)_tD^X$ zu reagieren. In diesem Falle könnten sich analoge Brückenelemente zu AP bilden, diese Triurethane sind in gleicher Weise ableitbar aus der oben gezeigten Struktur.

Zur Umsetzung der Moleküle H-M und Polyether $(HD^A)_tD^x$ mit Diisocyanaten kann es erforderlich sein, die Reaktion durch Katalyse zu beschleunigen. Als Katalysatoren sind die dem Fachmann aus der Urethan-Chemie hinlänglich bekannten Zinn-, Wismut- und Titan-Katalysatoren, wie Dibutylzinnlaurat, Dioctylzinndiketonat, Dibutylzinndilaurat, Dioctylzinndilaurat, beispielsweise erhältlich unter dem Handelsnamen TIB KAT® 216 (Goldschmidt TIB / TIB Chemicals) Dibutylzinndiacetylacetonat, Dibutylzinndiacetat, Dibutylzinndioctoat, oder Dioctylzinndiacetylacetonat, Borchi®-Katalysatoren, Wismutoxide, Wismutcarboxylat beispielsweise erhältlich unter dem Handelsnamen TIB KAT® 722 (Goldschmidt TIB / TIB Chemicals), Wismutmethansulfonat, Wismutnitrat, Wismutchlorid, Triphenyl-Wismut, Wismutsulfid, sowie Zubereitungen mit diesen Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat verwandt werden.

Des Weiteren eignen sich auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat. Bevorzugt ist die Verwendung von Zinkoctoat (Zink-2-ethylhexanoat), Dioctylzinndilaurat, Wismutoxiden, Wismutcarboxylat, Wismutkatalysator-Zubereitungen und/oder der Tetraalkylammoniumverbindungen, besonders bevorzugt diejenige von Zinkoctoat, Dioctylzinndilaurat und/oder Wismutcarboxylat, sowie Zubereitungen mit Wismut-Katalysatoren.

Der Katalysator wird bevorzugt in Konzentrationen von 5 - 5000 ppm eingesetzt. Die Einsatzmenge des Katalysators kann die Zusammensetzung des Endproduktes erheblich beeinflussen. Daher kann es sinnvoll sein für verschiedene Katalysatoren unterschiedliche Einsatzkonzentrationen zu wählen. Zum Beispiel können Organozinn-Katalysatoren bevorzugt in Konzentrationen von 5 - 150 ppm und Wismut-Carboxylate bevorzugt in Konzentrationen von 300 - 2000 ppm eingesetzt werden.

Bei den Fragmenten M der Moleküle der Formel H-M ist der Wasserstoff gebunden an ein Sauerstoff oder Stickstoffatom. Die Moleküle der Formel H-M entsprechen also Alkoholen, primären oder sekundären Aminen.

Geeignete Amine der Formel H-M, mit M gemäß Formeln (IVa) und (IVb), sind zum Beispiel Ethylamin, Diethylamin, Propylamin, Dipropylamin, Butylamin, Dibutylamin, Dicyclohexylamin, Dihexylamin, 2-Ethylhexylamin, Di-2-(ethylhexyl)amin, Ditridecylamin, Anilin, 1-Phenylethylamin, 2,6-Xyliden, 2-Phenylethylamin, Benzylamin, Toluidin, 2-Methoxyethylamin, 3-Methoxypropylamin, Di-(2-methoxyethyl)amin, 2-(Diethylamino)ethylamin, 3-(Dimethylamino)-1-propylamin, Bis-[(3-dimethylamino)propyl]amin, N-(3-Aminopropyl)imidazol oder deren Isomeren. Geeignete Amine sind auch Polyetheramine, die zum Beispiel unter dem Namen Jeffamin vertrieben werden, zum Beispiel Jeffamin ® M 2070.

Alkohole der Formel H-M, mit M gemäß Formel (IVc), die vorteilhaft eingesetzt werden können sind zum Beispiel Allylalkohol, 2-Allyloxyethanol, Vinylalkohol, Ethanol, sowie alle Isomeren des Propanols, Butanols, Pentanols, Hexanols, Heptanols, Octanols und Nonanols.

Weiterhin können insbesondere Fettalkohole eingesetzt werden. Typische Beispiele sind Caprinalkohol, 1-Undecanol, Laurylalkohol, 1-Tridecanol, Isotridecylalkohol, Myristylalkohol, 1-Pentadecanol, Cetylalkohol, Palmoleylalkohol, 1-Heptadecanol, Stearylalkohol, Isostearylalkohol, Oleylalkohol, Elaidylalkohol, Petroselinylalkohol, Linolylalkohol, Linolenylalkohol, 1-Nonadecanol, Elaeostearylalkohol, Arachylalkohol, 1-Heneicosanol, Gadoleylalkohol, Behenylalkohol, Erucylalkohol und Brassidylalkohol sowie deren technische Mischungen. Neben der Verbindungsklasse der Oxoalkohole, die meist 2 bis 4 Methylgruppen als Verzweigungen tragen, können auch so genannte Guerbetalkohole, die in 2-Stellung mit einer Alkylgruppe verzweigt sind als Startverbindungen eingesetzt werden. Geeignete Guerbetalkohole sind unter anderem 2-Ethylhexanol, 2-Butyloctanol, 2-Hexyldecanol und/oder 2-Octyldodecanol.

Auch cyclische Alkohole wie Cyclopentanol, 1-Methylcyclopentanol, Cyclohexanol, Furfurylalkohol, und Solketal können als Alkohole eingesetzt werden.

Geeignete Alkohole sind auch jegliche mono-OH-terminale Polyether bzw. Polyalkylenoxide wie z. B. Methyl- oder Butyl-gestartete Polyethylen- oder Polypropylenoxide bzw. deren Mischoxide.

Besonders bevorzugt werden Butanol, 2-Ethylhexanol, Nonanol, iso-Nonanol, 3,5,5-Trimethylhexanol, Decanol und Isotridecylalkohol oder ein Polyether bestehend aus Butanol gestartetem Polypropylenoxid, besonders bevorzugt entspricht M $C_4H_9O[CH_2CH(CH_3)O]_{3\ bis\ 8}$, insbesondere bevorzugt mit M entspricht $C_4H_9O[CH_2CH(CH_3)O]_{5-6}$- eingesetzt.

Erfindungsgemäße Alkoxylierungsprodukte können bevorzugt durch jedes Verfahren hergestellt/erhalten werden, das geeignet ist, erfindungsgemäße Alkoxylierungsprodukte zu erzielen. Besonders bevorzugt sind solche erfindungsgemäßen Alkoxylierungsprodukte, welche durch nachfolgend beschriebene Verfahren herstellbar/erhältlich sind bzw. hergestellt/erhalten werden.

Ein weiterer Gegenstand der vorliegenden Erfindung sind daher Verfahren, bevorzugt zur Herstellung von Alkoxylierungsprodukten. Nachstehend beschriebene Verfahren eignen sich besonders gut zur Herstellung erfindungsgemäßer Alkoxylierungsprodukte im allgemeinen als auch insbesondere zur Herstellung erfindungsgemäßer Alkoxylierungsprodukte umfassend die beschriebenen bevorzugten Ausführungsformen der erfindungsgemäßen Alkoxylierungsprodukte.

Das beanspruchte Verfahren, zur Herstellung der finalen Alkoxylierungsprodukte kann aus einer zweistufigen Reaktionsabfolge bestehen, wobei bevorzugt in einem ersten Umsetzungsschritt (a) Polyether der Formel $(HD^A)_tD^X$ mit Diisocyanaten (wie zuvor definiert) umgesetzt werden und in einem zweiten Umsetzungsschritt (b) das Produkt des ersten Umsetzungsschrittes (a) mit einem Molekül der Formel H-M umgesetzt werden.

In bevorzugten erfindungsgemäßen Verfahren zur Herstellung von Alkoxylierungsprodukten können die Polyether $(HD^A)_tD^x$ und die Diisocyanate bevorzugt in Gegenwart eines Katalysators reagieren. Bevorzugt können Disocyanate im molaren Überschuss gegenüber den Polyethern $(HD^A)_tD^x$ eingesetzt werden.

Bevorzugt werden im erfindungsgemäßen Verfahren im Umsetzungsschritt (a) Polyether $(HD^A)_tD^x$ und Diisocyanate miteinander gemischt. Bevorzugt können die Diisocyanate zu den Polyethern $(HD^A)_tD^x$ gegeben werden. Bevorzugt können die Diisocyanate zu erwärmten Polyethern $(HD^A)_tD^x$ gegeben werden. Die Mischung wird bevorzugtermaßen bei erhöhter Temperatur, umfassend Temperaturen größer 25°C vorgenommen, besonders bevorzugt bei Temperaturen von 40°C bis 100°C, insbesondere bevorzugt bei 60°C bis 80°C. Bevorzugt kann die Reaktion in Gegenwart eines Katalysators, insbesondere bevorzugt in Konzentrationen von 5 - 5000 ppm, stattfinden. Weiterhin bevorzugt kann es sein, dass der Katalysator bei der Mischungstemperatur, umfassend Temperaturen größer 25°C, besonders bevorzugt bei Temperaturen von 40°C bis 100°C, insbesondere bevorzugt bei 60°C bis 80°C, zugegeben wird. Bevorzugt wird die Mischung umfassend Diisocyanate und Polyether $(HD^A)_tD^X$ so wie bevorzugt Katalysator vor und/oder während und/oder nach der Zugabe einzelner Komponenten gerührt. Unter Rühren im Sinne dieser Erfindung wird jede Art des Durchmischens eines Reaktionsgemisches verstanden. Bevorzugt kann das Rühren bei erhöhter Temperatur, umfassend Temperaturen größer 25°C, besonders bevorzugt bei Temperaturen von 40°C bis 100°C, insbesondere bevorzugt bei 60°C bis 80°C, stattfinden. Bevorzugt wird während der gesamten Reaktionszeit gerührt. Insbesondere bevorzugt kann die Mischung 15 min bis 90 min, besonders bevorzugt 30 min bis 60 min, insbesondere 45 min, bevorzugt bei der Mischungstemperatur gerührt werden.
Gewünschtenfalls können dem der Reaktionsmischung als besonders bevorzugte Komponenten weiterhin Katalysator, insbesondere bevorzugt in Konzentrationen von 5 - 5000 ppm bezogen auf die Gesamtkonzentration aller Katalysatoren im Reaktionsgemisch, und/oder Diisocyanate und/oder Polyether $(HD^A)_tD^X$ zugeführt werden.
Die Temperatur der Mischung kann anschließend verändert werden. Insbesondere bevorzugt kann es sein, dass die Mischungstemperatur bei 60°C - 90 °C liegen kann und diese Temperatur für nachfolgende Verfahrensschritte beibehalten werden kann. Bevorzugt wird zur Reaktionsmischung im Umsetzungsschritt (b) weiterhin das Molekül H-M zugegeben.. Bevorzugt kann das Molekül H-M bei 60 bis 80°C, insbesondere bevorzugt bei 65 bis 75°C, zugegeben werden. Bevorzugt kann während und/oder nach der Zugabe des Moleküls H-M (weiterhin) gerührt werden. Bei besonderen Ausführungsformen kann es von Vorteil sein, wenn eine weitere Katalysatorzugabe vor oder während der Umsetzung mit H-M erfolgt. Bei dieser erneuten Katalysatorzugabe kann sowohl der gleiche Katalysator, der im ersten Reaktionsschritt zugesetzt wurde, als auch ein anderer Katalysator zugegeben werden. Bevorzugt kann die Mischung einige Stunden, bevorzugt 1 bis 8 Stunden, besonders bevorzugt 1,5 bis 4 Stunden, insbesondere 3 Stunden, bevorzugt bei der erhöhten Temperatur, gerührt werden. Die Schritte des Verfahrens können in beliebiger Reihenfolge durchgeführt werden. In einer besonders bevorzugten Ausführungsform erfolgt die Reihenfolge der Verfahrensschritte in der vorab aufgeführten Reihenfolge ihrer Beschreibung.

Anschließend können die Reaktionsprodukte, vorzugsweise auf Raumtemperatur, abgekühlt werden.
Es ist aber auch möglich dem Reaktionsgemisch noch weitere Komponenten wie Katalysatoren, $(HD^A)_tD^x$ und Diisocyanate, sowie gegebenenfalls. Verbindungen H-M zuzuführen und die Reaktion fortzuführen. Im Zuge dessen ist es beispielsweise möglich weiterhin einen oder mehrere Katalysatoren zuzusetzen, der dem/den zuvor in Umsetzungsschritten (a) und (b) eingesetzten Katalysator(en) gleich oder verschieden sein kann. Zudem ist es beispielsweise möglich, weiterhin ein oder mehrere Verbindungen der Formel H-M zuzusetzen, die gleich oder verschieden zu der/den zuvor dosierten Verbindung(en) H-M sein können. Ebenso ist es beispielsweise möglich weiterhin ein oder mehrere Diisocyanate zuzusetzen, die dem/den zuvor in Umsetzungsschritten (a) eingesetzten Diisocyanat(en) gleich oder verschieden sein kann.

Als besonders bevorzugte Komponenten können der Reaktionsmischung Katalysator, insbesondere bevorzugt in Konzentrationen von 5 - 5000 ppm bezogen auf die Gesamtkonzentration aller Katalysatoren im Reaktionsgemisch, und/oder Diisocyanate und/oder Polyether $(HD^A)_tD^X$, bevorzugt nur Katalysator, zugegeben werden. Die Komponenten können gleichzeitig oder nacheinander und/oder auch portionsweise, bevorzugt in 2 bis 12 Portionen, der Reaktionsmischung zugeführt werden. In einer bevorzugten Ausführungsform können Katalysator und mindestens eine weitere Komponente ausgewählt aus Diisocyanaten und/oder Polyether $(HD^A)_tD^x$ abwechselnd der Reaktionsmischung zugeführt werden, wobei die Gesamtmenge der einzelnen Komponenten jeweils in 2 bis 12 Portionen unterteilt werden kann und gegebenenfalls abwechselnd je eine Portion der gewählten Komponenten der Reaktionsmischung zugeführt wird. Wenn der Reaktionsmischung Katalysator zugeführt wird, kann es bevorzugt sein, denselben Katalysator wie gegebenenfalls im vorangegangenen Reaktionsschritt, bevorzugt portionsweise, zuzugeben oder aber einen oder mehrere von dem gegebenenfalls ersten Katalysator verschiedenen, weiteren Katalysatoren, bevorzugt portionsweise, zuzugeben. Bevorzugt kann die Zugabe weiterer Komponenten bei erhöhter Temperatur, umfassend Temperaturen größer 25°C, besonders bevorzugt bei Temperaturen von 40°C bis 100°C, insbesondere bevorzugt bei 60°C bis 80°C, und ganz besonders bevorzugt bei gleichbleibender Temperatur, umfassend Temperaturveränderungen von 5°C mehr oder weniger, wie im vorangegangenen Schritt, erfolgen. Bevorzugt wird die Reaktionsmischung vor und/oder während und/oder nach der Zugabe weiterer Komponenten, insbesondere bevorzugt Katalysator und/oder Diisocyanate und/oder Polyether $(HD^A)tD^X$,gerührt. Bevorzugt kann die Mischung einige Stunden, besonders bevorzugt 1 bis 8 Stunden, insbesondere 1,5 bis 4 Stunden, gerührt werden. Gewünschtenfalls kann die Zugabe von weiteren Komponenten, bevorzugt von Katalysator, unter den voranstehend angegebenen Temperaturbereichen und gegebenenfalls den angeführten Rührbedingungen einmal oder mehrmals, also zweimal, dreimal, viermal usw., also beliebig oft, besonders bevorzugt einmal, durchgeführt werden.

Erfindungsgemäß ganz besonders bevorzugt sind solche Verfahren, die in Gegenwart eines Katalysators, insbesondere bevorzugt in Konzentrationen von 5 - 5000 ppm, stattfinden und in denen als weitere Komponente mindestens ein weiteres Mal Katalysator, bevorzugt portionsweise, insbesondere bevorzugt in Konzentrationen von 5 - 5000 ppm bezogen auf die Gesamtkonzentration aller Katalysatoren im Reaktionsgemisch, zugesetzt wird.

Diese erfindungsgemäßen Alkoxylierungprodukte stellen auf Grund ihrer hydrolyseempfindlichen und zur Vernetzung neigenden Alkoxysilylgruppen härtbare modifizierte Polymere oder Oligomere dar. Die Vernetzung zu festen duroplastischen, oder abhängig von der Wahl der Vernetzungsdichte oder bestimmten Zuschlagstoffen auch elastomeren oder thermoplastischen Endprodukten erfolgt auf einfache Weise in Gegenwart von Wasser und wahlweise unter Zusatz eines Katalysators. Dieser Katalysator kann zum Beispiel eine Säure oder Base oder auch eine metallhaltige Verbindung sein. Durch Variation, beispielsweise Erhöhung der Temperatur während des Härtungsvorgangs kann die Topfzeit gesteuert, beispielsweise verkürzt werden. So lässt sich beispielsweise durch eine Variation des Anteils an Alkoxysilan-Einheiten in der modifizierten Polymerkette die Vernetzungsdichte und damit das mechanische und physiko-chemische Eigenschaftsprofil der ausgehärteten modifizierten Polymere in weiten Grenzen beeinflussen.

Die erfindungsgemäßen Zusammensetzungen enthalten neben dem erfindungsgemäßen Alkoxylierungsprodukt und/oder dem Produkt des erfindungsgemäßen Verfahrens der Formel (I) bevorzugt weitere Zusatzstoffe ausgewählt aus der Gruppe der Weichmacher, Füllstoffe, Lösungsmittel, Emulgatoren, Haftvermittler, Additive zur Anpassung des Fließverhaltens, sogenannten Rheologieadditiven und zumindest einem Härtungskatalysator. Bei Bedarf können außerdem Additive zur chemischen Trocknung, und/oder Stabilisatoren gegen thermische und/oder chemische Belastungen und/oder Belastungen durch ultraviolettes und sichtbares Licht in die Formulierung eingebracht werden.

Der Anteil der erfindungsgemäßen Alkoxylierungsprodukte an der erfindungsgemäßen Zusammensetzung beträgt vorzugsweise von 10 bis 90 Gew.-%, bevorzugt von 15 bis 70 Gew.-%, und besonders bevorzugt von 20 Gew.-% bis 65 Gew.-%.

Als Härtungs-Katalysatoren (für die Vernetzung oder Polymerisation der erfindungsgemäßen Zusammensetzung oder deren chemische Fixierung auf Partikel- oder makroskopischen Oberflächen) können die üblicherweise zur Hydrolyse und Kondensation von Alkoxysilanen eingesetzten Katalysatoren eingesetzt werden. Vorzugsweise werden als Härtungs-Katalysatoren organischen Zinnverbindungen, wie z.B. Dibutylzinndilaurat, Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinndicarboxylat, Dioctylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndiacetylacetonat und Dioctylzinndilaurat eingesetzt. Des Weiteren können auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Des Weiteren können auch Wismutkatalysatoren, z.B. Borchi®-Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Der Anteil der Härtungs-Katalysatoren an der erfindungsgemäßen Zusammensetzung beträgt vorzugsweise von 0,1 Gew.-% bis 5,00 Gew.-%, bevorzugt von 0,15 bis 2,00 Gew.-% und besonders bevorzugt von 0,2 bis 0,75 Gew.-%, bezogen auf die Gesamtzusammensetzung.

Die erfindungsgemäßen Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen. Der Inhalt der Beschreibung und der Ansprüche WO 2005/100482 wird hiermit als Bestandteil dieser Offenbarung eingeführt.

Der Katalysator bzw. die photolatente Base wird in Mengen von 0,001 bis 5,0 Gew.-%, bevorzugt 0,01 bis 1,0 Gew.-% und besonders bevorzugt 0,05 bis 0,9 Gew.-% bezogen auf die Massensumme der Reaktionskomponenten eingesetzt. Der Katalysator bzw. die photolatente Base kann in einer Portion oder aber auch portionsweise oder auch kontinuierlich zugegeben werden. Bevorzugt ist Zugabe der gesamten Menge in einer Portion.

Die erfindungsgemäße Zusammensetzung kann weitere Zusatzstoffe ausgewählt aus der Gruppe der Weichmacher, Füllstoffe, Lösungsmittel, Haftvermittler, Additive zur Anpassung des Fließverhaltens, sogenannten Rheologieadditiven und Trocknungsmittel, insbesondere chemische Feuchtigkeits-Trocknungsmittel enthalten.

Vorzugsweise enthält die erfindungsgemäße Zusammensetzung einen oder mehrere Haftvermittler und/oder ein oder mehrere Trocknungsmittel, insbesondere chemische Feuchtigkeits-Trocknungsmittel.

Als Haftvermittler können die aus dem Stand der Technik bekannten Haftvermittler, insbesondere Aminosilane in der erfindungsgemäßen Zusammensetzung enthalten sein. Als Haftvermittler können vorzugsweise Alkoxysilyl-Gruppen tragende Verbindungen die zusätzlich über primäre oder sekundäre Amingruppen, Vinylgruppen, Thiolgruppen, Arylgruppen oder alternativ Oxirangruppen verfügen, wie 3-Aminopropyltrimethoxysilan (Dynasylan® AMMO (Evonik), N-(2-Aminoethyl)-3-aminopropyltrimethoxysilan (Dynasylan® DAMO (Evonik)), N-(n-Butyl)aminopropyltrimethoxysilan (Dynasylan® 1189 (Evonik)), 3-Mercaptopropyltrimethoxysilan (Dynasylan® MTMO, Evonik), 3-Glycidyloxypropyltriethoxysilan (Dynasylan® GLYEO, Evonik) 3-Glycidyloxypropyltrimethoxysilan (Dynasylan® GLYMO, Evonik), Phenyltrimethoxysilan (Dynasylan® 9165 oder Dynasylan® 9265, Evonik) oder oligomere Amino/Alkyl-Alkoxysilane wie z.B. Dynasylan® 1146 (Evonik), jeweils alleine oder in Mischung eingesetzt werden. Bevorzugte vorhandene Haftvermittler sind z. B. 3-Aminopropyltriethoxysilan (Geniosil® GF 93 (Wacker), Dynasylan® AMEO (Evonik®)) und/oder (3-Aminopropy)methyldiethoxysilan (Dynasylan® 1505 (Evonik®)), 3-Aminopropyltrimethoxysilan (Dynasylan® AMMO (Evonik), N-(2-Aminoethyl)-3-aminopropyltrimethoxysilan (Dynasylan® DAMO (Evonik)), Dynasylan® 1146 (Evonik), besonders bevorzugt 3-Aminopropyltriethoxysilan, 3-Aminopropyltrimethoxysilan, N-(2-Aminoethyl)-3-aminopropyltrimethoxysilan, Dynasylan® 1146, und insbesondere bevorzugt sind 3-Aminopropyltrimethoxysilan, 3-Aminopropyltriethoxysilan, N-(2-Aminoethyl)-3-aminopropyltrimethoxysilan und Dynasylan® 1146.
Der Anteil der Haftvermittler an der erfindungsgemäßen Zusammensetzung beträgt vorzugsweise von größer 0 bis 5,0 Gew.-%, bevorzugt von 0,5 bis 4,0 Gew.-% und besonders bevorzugt von 1,0 bis 2,5 Gew.-% bezogen auf die Gesamtzusammensetzung.

Es kann vorteilhaft sein, wenn die erfindungsgemäße Zusammensetzung ein Trocknungsmittel aufweist, z. B. zum Binden von durch Formulierungskomponenten eingetragenen, oder nachträglich durch den Abfüllprozess oder die Lagerung eingebrachten Wassers oder Feuchtigkeit. Als Trocknungsmittel können in den erfindungsgemäßen Zusammensetzungen prinzipiell alle aus dem Stand der Technik bekannten Trocknungsmittel eingesetzt werden. Als chemische Trocknungsmittel kann z.B. Vinyltrimethoxysilan (Dynasylan® VTMO , Evonik oder Geniosil® XL 10, Wacker AG), Vinyltriethoxysilan (Dynasylan® VTEO, Evonik oder Geniosil® GF 56, Wacker), Vinyltriacetoxysilan (Geniosil® GF 62, Wacker), N-Trimethoxysilylmethyl-O-methylcarbamat (Geniosil® XL 63, Wacker), N-Dimethoxy(methyl)silylmethyl-O-methyl-carbamat, N-Methyl[3-(Trimethoxysilyl)-propyl]carbamat (Geniosil® GF 60, Wacker), Vinyldimethoxymethylsilan (Geniosil® XL 12, Wacker), Vinyltris(2-methoxyethoxy)silan (Geniosil® GF 58, Wacker) Bis(3-triethoxysilylpropyl)amin (Dynasylan® 1122, Evonik), Bis(3-trimethoxysilylpropyl)amin (Dynasylan® 1124), N-Dimethoxy(methyl)silylmethyl-O-methyl-carbamat (Geniosil® XL 65, Wacker) oder oligomere Vinylsilane wie beispielsweise Dynasylan® 6490 und Dynasylan® 6498 (beide zu beziehen von Evonik) alleine oder in Mischung verwandt werden. Vorzugsweise werden Vinyltrimethoxysilan (Dynasylan® VTMO , Evonik oder Geniosil® XL 10, Wacker AG), Vinyltriethoxysilan (Dynasylan® VTEO, Evonik oder Geniosil® GF 56, Wacker) als Trocknungsmittel eingesetzt. Als chemisches Feuchtigkeits-Trocknungsmittel enthält die erfindungsgemäße Zusammensetzung bevorzugt Vinyltrimethoxysilan (Dynasylan® VTMO , Evonik oder Geniosil® XL 10, Wacker AG). Ferner kann zusätzlich oder alternativ zur chemischen Trocknung ein physikalisches Trocknungsmittel, wie z.B. Zeolithe, Molsiebe, wasserfreies Natriumsulfat oder wasserfreies Magnesiumsulfat verwendet werden.

Der Anteil der Trocknungsmittel an der erfindungsgemäßen Zusammensetzung beträgt vorzugsweise von größer 0 bis 5 Gew.-%, bevorzugt von 0,2 bis 3 Gew.-% bezogen auf die Gesamtzusammensetzung.

Die erfindungsgemäße Zusammensetzung kann einen oder mehrere Zusatzstoffe ausgewählt aus der Gruppe der Weichmacher, Füllstoffe, Lösungsmittel und Additive zur Anpassung des Fließverhaltens (Rheologieadditive) enthalten.

Die Weichmacher können z. B. ausgewählt werden aus der Gruppe der Phthalate, der Polyester, Alkylsulfonsäureester des Phenols, Cyclohexandicarbonsäureester oder auch der Polyether. Als Weichmacher werden nur solche Verbindungen eingesetzt, die von den erfindungsgemäßen Alkoxylierungsprodukten der Formel (I) verschieden sind.

Wenn Weichmacher in der erfindungsgemäßen Zusammensetzung vorhanden sind, beträgt der Anteil der Weichmacher an der erfindungsgemäßen Zusammensetzung vorzugsweise von größer 0 Gew.-% bis 90 Gew.-%, bevorzugt 2 Gew.-% bis 70 Gew.- %, besonders bevorzugt 5 Gew.-% bis 50 Gew.-% bezogen auf die Gesamtzusammensetzung.

Als Füllstoffe können z. B. gefällte oder gemahlene Kreide, anorganische Carbonate im allgemeinen, gefällte oder gemahlene Silikate, gefällte oder pyrogene Kieselsäuren, Glaspulvern, Glashohlkugeln (sog. Bubbles), Metalloxiden, wie z.B. $TiO_2$, $Al_2O_3$, natürliche oder gefällte Bariumsulfate verstärkende Fasern, wie Glasfasern oder Kohlefasern, lang oder kurzfaserige Wollastonite, Kork, Ruß oder Graphit eingesetzt werden. Vorteilhaft können hydrophobierte Füllstoffe eingesetzt werden, da diese Produkte einen geringeren Wassereintrag aufweisen und die Lagerstabilität der

Formulierungen verbessern.

Wenn Füllstoffe in der erfindungsgemäßen Zusammensetzung vorhanden sind, beträgt der Anteil der Füllstoffe an der erfindungsgemäßen Zusammensetzung vorzugsweise von 1 bis 70 Gew.-% bezogen auf die Gesamtzusammensetzung, wobei für die hier genannten Füllstoffe mit Ausnahme der pyrogenen Kieselsäuren Konzentrationen von 30 bis 65 Gew.-% besonders bevorzugt sind. Werden pyrogene Kieselsäuren verwendet ist ein Anteil der pyrogenen Kieselsäuren von 2 bis 20 Gew.-% besonders bevorzugt.

Als Rheologieadditive, vorzugsweise zusätzlich zum Füllstoff enthalten, können aus der Gruppe der Amidwachse, zu beziehen z.B. von Cray Valley unter dem Markennamen Crayvallac®, gehärtete Pflanzenöle und Fette, pyrogene Kieselsäuren, wie z.B. Aerosil® R202 oder R805 (beide zu beziehen von Evonik) oder Cab-O-Sil® TS 720 oder TS 620 oder TS 630 (vertrieben von Cabot) ausgewählt werden. Werden pyrogene Kieselsäuren bereits als Füllstoff verwendet, kann die Zugabe eines Rheologieadditivs entfallen.

Wenn Rheologieadditive in der erfindungsgemäßen Zusammensetzung vorhanden sind, beträgt der Anteil der Rheologieadditive an der erfindungsgemäßen Zusammensetzung je nach gewünschtem Fließverhalten vorzugsweise von größer 0 Gew.-% bis 10 Gew.-%, bevorzugt von 2 Gew.-% bis 6 Gew.-% bezogen auf die Gesamtzusammensetzung.

Die erfindungsgemäßen Zusammensetzungen können Lösungsmittel enthalten. Die Lösungsmittel können dabei beispielsweise der Erniedrigung der Viskosität der unvernetzten Mischungen dienen oder das Aufziehen auf die Oberfläche begünstigen. Als Lösungsmittel kommen prinzipiell sämtliche Lösungsmittel sowie Lösemittelmischungen in Betracht. Bevorzugte Beispiele für solche Lösungsmittel sind Ether wie z.B. t-Butyl-methylether, Ester, wie z.B. Ethylacetat oder Butylacetat oder Diethylcarbonat sowie Alkohole, wie z.B. Methanol, Ethanol sowie die verschiedenen Regioisomere des Propanols und Butanols oder auch anwendungsspezifisch ausgewählte Glykoltypen. Weiterhin können aromatische und/oder aliphatische Lösemittel wie auch halogenierte Lösemittel, wie z.B. Dichlormethan, Chloroform, Tetrachlormethan, Fluorkohlenwasserstoffe (FREON) u.a.m zum Einsatz kommen, aber auch anorganische Lösemittel wie beispielsweise Wasser, $CS_2$, überkritisches $CO_2$ u.a.m..

Bei Bedarf können die erfindungsgemäßen Zusammensetzungen außerdem eine oder mehrere Substanzen, ausgewählt aus der Gruppe umfassend Co-Vernetzer, Flammschutzmittel, Entlüfter, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht, enthalten.

Als UV-Stabilisatoren können z. B. bekannte Produkte auf Basis gehinderter Phenolischer Systeme eingesetzt werden. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin®-Stabilisatoren (Ciba), wie z. B. Tinuvin®-Stabilisatoren (Ciba), beispielsweise Tinuvin® 1130, Tinuvin® 292 oder auch Tinuvin® 400, bevorzugt Tinuvin® 1130 in Kombination mit Tinuvin® 292 eingesetzt werden. Ihre Einsatzmenge richtet sich nach dem Grad der erforderlichen Stabilisierung.

Zusätzlich können den härtbaren Zusammensetzungen Covernetzer zur Steigerung von mechanischer Härte und Reduktion der Fließneigung beigemischt werden. Solche Covernetzer sind typischerweise Substanzen die in der Lage sind 3, 4 oder mehr vernetzungsfähige Gruppen zur Verfügung zu stellen. Beispiele im Kontext dieser Erfindung sind 3-Aminopropyltriethoxysilan, Tetramethoxysilan oder Tetraethoxysilan.

Als weitere Komponenten können die erfindungsgemäßen Zusammensetzungen vorzugsweise weitere zumeist monomere Silane, Hydroxylgruppen tragende Siloxane oder Lösungsmittel enthalten.

Als weitere Silane können dabei prinzipiell sämtliche Silane, bevorzugt mit hydrolysierbaren Alkoxygruppen, eingesetzt werden und insbesondere Amingruppen oder Vinylgruppen tragende Silane sowie diejenigen, die in der DE 10 2006 054155 oder der WO 2005/003201 beschrieben sind.

Als Monosilanol-bildende Verbindungen werden solche Verbindungen bezeichnet, welche exakt eine Silanolgruppe tragen, oder durch Reaktion mit Feuchtigkeit solche zu bilden vermögen. Als Beispiel für Silanol-Gruppen tragende Verbindungen sind folgende Strukturen zu nennen $(CH_3)_3SiOH$, $(CH_3CH_2)_3SiOH$, $(CH_3CH_2CH_2)_3SiOH$, $(C_6H_{10})_3SiOH$, $(C_6H_{10})_2CH_3SiOH$, $R_3Si\text{-}O\text{-}SiR_2\text{-}OH$ (wobei R ein Kohlenwasserstoff, aber auch ein Siloxan sein kann), $(C_6H_{10})(CH_3CH_2)_2SiOH$, $(C_6H_{10})_2CH_3CH_2SiOH$. Bevorzugt sind Verbindungen vom Typ $R_3Si\text{-}OH$, in denen R für eine Methyl-, Ethyl-, Propyl-, Vinyl- oder Phenyl-Gruppe steht, wobei die Methyl-Gruppe besonders bevorzugt ist. Ebenso verwendbar sind alle mit OH-Gruppen reagierenden Chlorsilane und Chlorsiloxane, wie z.B. $(CH_3)_3SiCl$.

Beispiele für Verbindungen, die in der Lage sind mit Feuchtigkeit Silanol-tragende Verbindungen zu bilden, sind (N,N-dimethylamino)triethylsilan, (N,N-dimethylamino)trimethylsilan, N,O-bis(trimethylsilyl)acetamid, N,O-bis(triethylsilyl)acetamid, N-(trimethylethylsilyl)acetamid, Bistrimethylsilylharnstoff, Hexamethyldisilazan, 1,1,3,3,-Tetramethyldisilazan, Trimethylsilylphenoxyd, Trimethylsilyl-alkoholat (wobei der Alkohol aus der Gruppe der C1-C10 Alkohole stammt) und Dimethylsilyldiethylamin, wobei die Verwendung von Hexamethyldisilazan besonders vorteilhaft ist.

Weiterhin können Verbindungen der Formel $R_3Si\text{-}O\text{-}X$ eingesetzt werden, wobei X für Elemente aus der Gruppe der Halogene, aber auch für Kohlenwasserstoffe, die ein azides Wasserstoffatom enthalten, stehen kann. Diese Kohlenwasserstoffe mit azidem Wasserstoffatom können aus der Gruppe der Alkohole, bevorzugt sind Methanol, Ethanol, Propanol, Butanol, iso-Butanol, kommen, aber auch von Carbonsäuren abgeleitet sein, wie zum Beispiel Ameisensäure, Essigsäure, Propionsäure, Bernsteinsäure, Laurinsäure, Palminsäure, Stearinsäure, Acrylsäure, Methacrylsäure, Ölsäure, Linolsäure, Oxalsäure, Maleinsäure, Adipinsäure, Benzoesäure, Phthalsäure, Terephthalsäure, sowie die Anhydride dieser Säuren, da aus diesen durch Feuchtigkeitszutritt ebenfalls die Säure gebildet werden kann. Weiterhin kann R aus primären oder sekundären Aminen bestehen. Beispielhaft erwähnt seien hier Ammoniak, Methylamin, Dimethylamin, Ethylamin, Diethylamin, Propylamin, Dipropylamin, Butylamin, Phenylamin. Weitere Möglichkeiten sind Säureamide und Ketone.

Bei Verwendung des besonders bevorzugten Hexamethyldisilazans, aber auch bei Verwendung vieler anderer Silanol-bildender Verbindung ist es vorteilhaft, dass zu dem Reaktionsgemisch eine organische Säure aus der Gruppe der Carbonsäuren zugegeben wird, da dies die Ausbeute der Reaktion deutlich erhöht. Beispielhaft ist hier zu nennen; Ameisensäure, Essigsäure, Propionsäure, Bernsteinsäure, Laurinsäure, Palminsäure, Stearinsäure, Acrylsäure, Methacrylsäure, Ölsäure, Linolsäure, Oxalsäure, Maleinsäure, Adipinsäure, Benzoesäure, Phthalsäure, Terephthalsäure, wobei Essigsäure, Propionsäure, Maleinsäure und Ölsäure bevorzugt sind. Bei Verwendung von HMDS zusammen mit der hier katalytisch wirkenden Carbonsäure findet keine Konkurrenzreaktion der Carbonsäure mit dem HMDS um die zu verkappende OH-Funktion statt. Die Säuren reagieren hier bevorzugt mit dem Stickstoff des HMDS. Besonders bevorzugt ist die Ölsäure, da sie unter den Reaktionsbedingungen wenig flüchtig ist, kaum Verfärbungen verursacht und ohne unangenehmen Geruch ist. Zusätzlich oder alternativ kann auch durch Einsatz einer Stickstoffbase wie Triethylamin, Pyridin, Aminopyridin oder Imidazol eine Katalyse der Reaktion erreicht werden.

Die erfindungsgemäßen Zusammensetzungen können z. B. Dicht- oder Klebstoff sein oder zur Herstellung eines Dicht- oder Klebstoffs verwendet werden.

Die erfindungsgemäßen Zusammensetzungen können insbesondere zur Verstärkung, Nivellierung, Modifikation, Verklebung, Abdichtung und/oder Beschichtung von Substraten verwendet werden. Geeignete Substrate sind z. B. partikuläre oder flächige Substrate. Eine weitere Einsatzmöglichkeit ist die Verwendung in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substrat geeignet. Die in dieser Erfindung verwendeten Alkoxylierungsprodukte können als Basis einer härtbaren Zusammensetzung hervorragend zur Beschichtung und Modifikation von Oberflächen und Fasern verwendet werden. Als weitere Beispiele sollen hier die Anwendungen auf Metallen, hier vor allem die Konstruktionswerkstoffe wie Eisen, Stahl, Edelstahl und Gusseisen, Eisenwerkstoffen, Aluminium, mineralischen Substraten, wie Stein, Estrich, Mörtel und Beton, Keramiken, Gläsern, keramischen Materialien, vor allem basierend auf festen Metall- oder Nichtmetalloxiden oder Carbiden, Aluminiumoxid, Magnesiumoxid oder Calciumoxid, sowie mineralische Substrate oder organische Substrate, Polyester, glasfaserverstärktem Polyester, Polyamid, Textilien und Gewebe aus Baumwolle und Polyester, Kork und/oder Holz genannt werden. Ebenso kann die Zusammensetzung zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern genutzt werden.

Durch dieses breite Haftungsspektrum sind sie auch für die Verklebung von Materialkombinationen aus den genannten Substraten geeignet. Hierbei ist es nicht ausschlaggebend, ob die Oberflächen glatt oder angeraut oder porös sind. Angeraute oder poröse Oberflächen sind aufgrund der größeren Kontaktfläche zum Klebstoff zu bevorzugen.

Damit können die Alkoxylierungsprodukte beispielsweise als Grundstoffe für die Herstellung von Klebstoffen, als reaktive Vernetzer, als Haftvermittler und Primer sowie Bindemittel für Metalle, Glas und Glasfasern/Glasgewebe, Holz, Holzwerkstoffen, Naturfasern, zur Ausrüstung und Behandlung von gegebenenfalls textilen Flächengebilden und Fasern aus natürlichen und/oder synthetischen sowie mineralischen Rohstoffen sowie beispielsweise auch Kork, Leder, Papier, Tissue, silikatischen und oxidischen Materialien dienen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Soweit nicht explizit gekennzeichnet sind alle Angaben zu relativen Anteilen (Anteilen in %) in Gewichtsprozent angegeben.

<u>Beispiele:</u>

1. Synthesebeispiele:

Es wurden folgende Alkoxysilylgruppen enthaltende Polyether eingesetzt, die gemäß dem in EP 2093244 dargelegten Verfahrensprinzip der DMC-katalysierten Alkoxylierung von 3-Glycidyloxypropyltriethoxysilan (GLYEO) mit Propylenoxid (PO) hergestellt wurden:

Silylpolyether SP-1:

Polypropylenglygol-gestarteter, fast farbloser Polyether der mittleren Molmasse Mw von ca. 14000 g/mol und vierfacher Triethoxysilanfunktionalität.
Chemischer Aufbau gemäß Monomerendosage:
PPG(2000 g/mol) + 68 mol PO + eine Mischung aus 4 mol GLYEO und 119 mol PO

Silylpolyether SP-2:

Polypropylenglygol-gestarteter, fast farbloser Polyether der mittleren Molmasse Mw von ca. 14000 g/mol und zweifacher Triethoxysilanfunktionalität.
Chemischer Aufbau gemäß Monomerendosage:
PPG(2000 g/mol) + 18 mol PO + eine Mischung aus 2 mol GLYEO und 180 mol PO

Beispiel 1:

505 g Silylpolyether SP-1 wurden vorgelegt, auf 60 °C geheizt und mit 16 g IPDI versetzt. Anschließend wurde 0,5 g TIB KAT 722 zugesetzt. Das Gemisch wurde 45 Minuten lang gerührt. Danach wurden 5,3 g n-Butylamin zugesetzt und das Reaktionsgemisch für weitere drei Stunden bei 80°C gerührt.
Es wurde ein klares, farbloses Produkt erhalten.

Beispiel 2:

505 g Silylpolyether SP-2 wurden vorgelegt, auf 60 °C geheizt und mit 16 g IPDI versetzt. Anschließend wurde 0,5 g TIB KAT 722 zugesetzt. Das Gemisch wurde 45 Minuten lang gerührt. Danach wurden 5,3 g n-Butylamin zugesetzt und das Reaktionsgemisch für weitere drei Stunden bei 80°C gerührt.
Es wurde ein klares, farbloses Produkt erhalten.

Beispiel 3:

510 g Silylpolyether SP-1 wurden vorgelegt, auf 80 °C geheizt und mit 16 g IPDI versetzt. Anschließend wurde 0,03 g Dioctylzinnlaurat zugesetzt. Das Gemisch wurde 45 Minuten lang gerührt. Danach wurden 4,3 g n-Butylamin zugesetzt und das Reaktionsgemisch für weitere drei Stunden bei 80°C gerührt.
Es wurde ein klares, farbloses Produkte erhalten.

Beispiel 4:

509 g Silylpolyether SP-2 wurden vorgelegt, auf 80 °C geheizt und mit 16 g IPDI versetzt. Anschließend wurde 0,03 g Dioctylzinnlaurat zugesetzt. Das Gemisch wurde 45 Minuten lang gerührt. Danach wurden 4,3 g n-Butylamin zugesetzt und das Reaktionsgemisch für weitere drei Stunden bei 80°C gerührt.
Es wurde ein klares, farbloses Produkte erhalten.

Beispiel 5:

507 g Silylpolyether SP-1 wurden vorgelegt, auf 60 °C geheizt und mit 16 g IPDI versetzt. Anschließend wurde 0,5 g TIB KAT 722 zugesetzt. Das Gemisch wurde 45 Minuten lang gerührt. Danach wurden 2,6 g n-Butylamin und 13,8 g eines Polyethers der allgemeinen Formel $C_4H_9O[CH_2CH(CH_3)O]_{5-6}H$ zugesetzt und das Reaktionsgemisch für weitere drei Stunden bei 80°C gerührt.
Es wurde ein klares, farbloses Produkte erhalten.

Beispiel 6:

503 g Silylpolyether SP-2 wurden vorgelegt, auf 60 °C geheizt und mit 16 g IPDI versetzt. Anschließend wurde 0,5 g TIB KAT 722 zugesetzt. Das Gemisch wurde 45 Minuten lang gerührt. Danach wurden 13,8 g Bis(2-Ethylhexyl)-amin zugesetzt und das Reaktionsgemisch für weitere drei Stunden bei 80°C gerührt.
Es wurde ein klares, farbloses Produkte erhalten.

Beispiel 7:

500 g Silylpolyether SP-1 wurden vorgelegt, auf 60 °C geheizt und mit 16 g IPDI versetzt. Anschließend wurde 0,7 g TIB KAT 722 zugesetzt. Das Gemisch wurde 45 Minuten lang gerührt. Danach wurden 117 g Jeffamin® M 2070 (Polyetheramin der Firma Huntsman) zugesetzt und das Reaktionsgemisch für weitere drei Stunden bei 80°C gerührt. Es wurde ein klares, farbloses Produkte erhalten.

Beispiel 8 (Vergleichsbeispiel) :

2555 g Silylpolyether SP-2 wurden vorgelegt, auf 65 °C geheizt und mit 36,2 g *n*-Butylisocyanat versetzt. Anschließend wurde 2,59 g TIB KAT 722 zugesetzt. Das Gemisch wurde 4 Stunden lang gerührt. Es wurde ein klares, farbloses Produkte mit einer Viskosität von 9-12 Pa*s erhalten.

2. Anwendungsbeispiele:

Beispiele für Kleb- und Dichtstoff-Formulierungen:

25,9 Gew.-% des Alkoxylierungsprodukt nach den jeweiligen Beispielen wurde mit 18,1 Gew.-% von Diisoundecylphthalat, 51,1 Gew.-% einer gefällten Kreide (Socal ® U2S2, Solvay), 0,5 Gew.-% Titandioxid (Kronos® 2360, Kronos), 1,4 Gew.-% Haftvermittler (Dynasylan® AMMO, Evonik), 1,1 Gew.-% Trocknungsmittel (Dynasylan® VTMO, Evonik), 1,5 Gew.-% Teile eines Antioxidans-Stabilisator-Gemisches (Verhältnis Irganox° 1135:Tinuvin® 1130:Tinuvin® 292 = Verhältnis 1:2:2 und 0,4 Gew.-% des Härtungskatalysators (TIB® KAT 223, TIB) im Mischer (Speedmixer® FVS 600, Hausschild) intensiv vermischt. Die fertige Formulierung wurde in PE-Kartuschen überführt und vor der Applikation mindestens 24h bei Raumtemperatur gelagert. Da die Formulierungen der Alkoxylierungsprodukte in den oben genannten Beispielen in allen Fällen identisch waren, wurde die Ergebnisdiskussion anhand der Benennung des als Basis der Formulierung genutzten Alkoxylierungsproduktes durchgeführt.

**Bestimmung von Bruchkraft und Bruchdehnung in Anlehnung an DIN 53504:**

Die Formulierung wurde mit einer Schichdicke von 2mm auf einer PE-Oberfläche aufgerakelt.. Die Filme wurden 7 Tage bei 23 °C und 50% relativer Luftfeuchte gelagert. Anschließend wurden aus den Filmen mit Hilfe einer Schneidform und einer Kniehebelpresse S2-Schulterstäbe ausgestanzt.
Die so hergestellten Schulterstäbe wurden zur Prüfung in eine Universalprüfmaschine (Fa. Shimadzu) eingespannt, und es wurden die Reißfestigkeit und die Reißdehnung beim Dehnen der Probekörper mit konstanter Geschwindigkeit (200 mm/min) ermittelt.

**Bestimmung der Zugscherfestigkeit von Überlappungsklebungen in Anlehung an DIN EN 1465:**

Mit der angefertigten Formulierung wurden Überlappungsverklebungen erstellt. Hierbei wurden zwei Edelstahl Substrate (V2A, 1.4301) eingesetzt. Der Bereich der Überlappungsverklebung betrug 500 mm$^2$. Die Aushärtung der Verklebungen erfolgte bei 23°C und 50% relativer Luftfeuchte. Nach 21 Tagen wurden die Verklebungen in eine Universalprüfmaschine (Fa. Shimadzu) eingespannt, und es wurde mit konstanter Geschwindigkeit (10 mm/min) eine Kraft auf die Verklebung ausgeübt, bis ein Bruch der Verklebung eintrat. Die Bruchkraft wurde ermittelt.

**Bestimmung der Durchhärtungsgeschwindigkeit:**

Ein Kleb- bzw. Dichtstoffstrang wird auf eine PE-Oberfläche appliziert (Höhe: 10mm, Breite: 20mm). Nach 24h Lagerung bei 23 °C und 50% relativer Luftfeuchte wird ein Stück aus dem Strang herausgeschnitten und die Dicke der ausgehärteten Schicht wird mit einer Schieblehre gemessen.

Tabelle 1: Kennwerte der Formulierung während bzw. nach der Aushärtung:

| | S2-Schulterstab | | Verklebung | |
|---|---|---|---|---|
| Polymer nach Beispiel | Bruchspannung [N/mm$^2$] | Bruchdehnung [%] | Zugscherfestigkeit [N/mm$^2$)] | Druchhärtung nach 24h [mm] |
| 1 | 1,8 | 126 | 1,8 | 2,8 |
| 2 | 1,6 | 278 | 1,2 | 2,4 |

(fortgesetzt)

| | S2-Schulterstab | | Verklebung | |
|---|---|---|---|---|
| Polymer nach Beispiel | Bruchspannung [N/mm$^2$] | Bruchdehnung [%] | Zugscherfestigkeit [N/mm$^2$)] | Druchhärtung nach 24h [mm] |
| 3 | 2,0 | 137 | 1,8 | 2,5 |
| 4 | 1,4 | 291 | 1,0 | 2,4 |
| 5 | 1,9 | 140 | 1,9 | 2,8 |
| 6 | 1,7 | 301 | 1,3 | 2,3 |
| 7 | 1,5 | 133 | 1,5 | 2,6 |
| 8 | 0,6 | 196 | 0,9 | nicht bestimmt |

Anhand der in Tabelle 1 zusammengefassten Anwendungseigenschaften der erfindungsgemäßen Zusammensetzungen, welche die erfindungsgemäßen Alkoxylierungsprodukte enthalten, lässt sich belegen, dass die Produkte bereits nach 24 h eine ausreichende Tiefenhärtung von mehr als 2 cm aufweisen.

Des Weiteren ist gegenüber dem Stand der Technik ein deutlich verbessertes Eigenschaftsprofil zu verzeichnen. Sowohl die Bruchspannung, als auch die Bruchdehnung (in Anlehnung an DIN 53504) konnten gegenüber dem Vergleichsbeispiel durch Einsatz von Verbindungen der Formel (I) mit mindestens 10 % der Reste M gemäß Formel IVa und/oder IVb deutlich erhöht werden.

Darüber hinaus wurden bei Verklebungsprüfungen unter Anwendung der erfindungsgemäßen Zusammensetzungen deutlich höhere Zugfestigkeitswerte erreicht als bei der Vergleichszusammensetzung. Die Ergebnisse zeigen somit, dass eine Terminierung mit Aminen zu höheren Dehnbarkeiten in Kombination mit höheren Festigkeiten führt.

Lagerstabilität:

Zudem zeigten Versuche zur Lagerstabilität, bei denen die Alkoxylierungsprodukte der Beispiele 1 bis 7 mit dem Alkoxylierungsprodukte 8 verglichen wurden, dass die Lagerstabilität von Zusammensetzungen enthaltend die entsprechenden Alkoxylierungsprodukte durch Einsatz von Verbindungen der Formel (I) mit mindestens 10 mol-% der Reste M, bezogen auf die Gesamtmenge der Reste M, gemäß Formel (IVa) und/oder (IVb) deutlich verbessert wird. Bereits durch Einsatz von Verbindungen der Formel (I) mit mindestens 10 mol-% der Reste M, bezogen auf die Gesamtmenge der Reste M, gemäß Formel (IVa) und/oder (IVb) ist somit eine signifikante Verbesserung zu erkennen, welche durch Einsatz von Verbindungen der Formel (I) mit mindestens 25 mol-% oder 51 mol-% der Reste M, bezogen auf die Gesamtmenge der Reste M, gemäß Formel (IVa) und/oder (IVb) jeweils noch erhöht werden kann.

## Patentansprüche

1. Alkoxylierungsprodukte, die die Strukturelemente der Formel (I) enthalten

$$M_i\, D_j\, T_k\, Q_l\, UR_u\, AP_v \qquad \text{Formel (I)}$$

wobei M, D, T, Q nicht untereinander, sondern über die Gruppen UR und/oder AP miteinander verknüpft sind, und die Gruppen UR und AP nicht untereinander verknüpft sind

i = 1 bis 16,
j = 0 bis 10,
k = 0 bis 6,
l = 0 bis 4,
u = 1 bis 17,
v = 0 bis 6,
M unabhängig voneinander gleiche oder verschiedene Reste aus der Gruppe:

a) -NH-$R^{12}$ Formel (IVa),
b) -$NR^{12}_2$ Formel (IVb),

c) $-OR^{12}$ Formel (IVc) und

d)

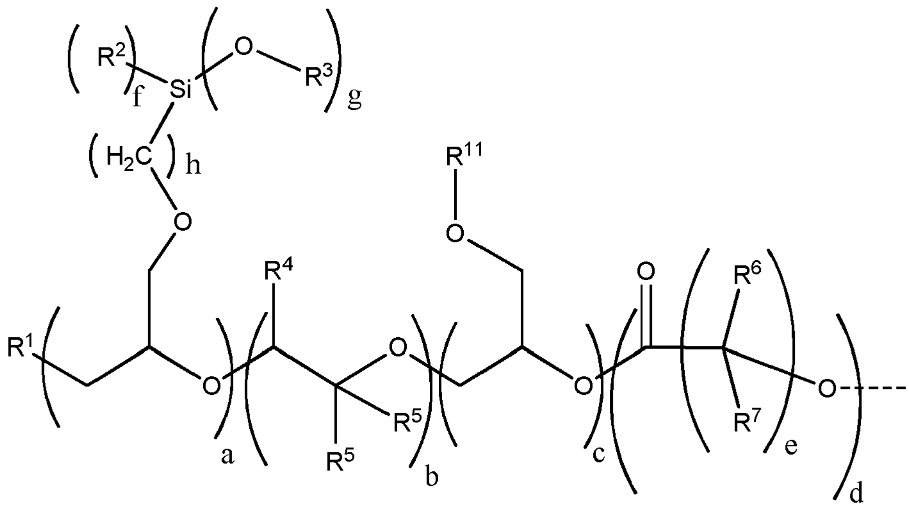

Formel (Ia)

mit

$R^1$ = unabhängig voneinander ein gesättigter oder ungesättigter, linearer oder verzweigter organischer Kohlenwasserstoffrest ist, der als Heteroatome O, S und / oder N enthalten kann

$R^2$ = unabhängig voneinander eine Alkylgruppe mit 1 bis 8 Kohlenstoffatomen,

$R^3$ = unabhängig voneinander eine Alkylgruppe mit 1 bis 8 Kohlenstoffatomen,

$R^4$ = unabhängig voneinander ein Wasserstoffradikal oder eine Alkylgruppe mit 1 bis 8 Kohlenstoffatomen,

$R^5$ = unabhängig voneinander ein Wasserstoffradikal, eine Alkylgruppe mit 1 bis 20 Kohlenstoffatomen, eine Aryl- oder Alkarylgruppe,

oder $R^4$ und einer der Reste $R^5$ können gemeinsam einen Ring bilden, der die Atome an die $R^4$ und $R^5$ gebunden sind einschließt,

$R^6$ und $R^7$ = unabhängig voneinander gleich $R^5$ und/oder Alkoxy,

$R^{11}$ = unabhängig voneinander eine gesättigte oder ungesättigte Alkylgruppe mit 1 bis 24 Kohlenstoffatomen, deren Kette durch Sauerstoff unterbrochen sein kann und weiter funktionelle Gruppen tragen kann wie z.B. Carboxylgruppen gegebenenfalls mit Alkoholen wie z.B. Methanol, Ethanol, Propanol, Butanol oder Hexanol verestert, Hydroxygruppen gegebenenfalls. mit Säuren wie Essigsäure, Buttersäure oder (Meth)Acrylsäure bzw. den Polymerisaten der (Meth)Acrylsäure verestert, oder eine Arylgruppe mit 6 bis 20 Kohlenstoffatomen, oder eine Alkarylgruppe mit 7 bis 20 Kohlenstoffatomen;

a = 0 bis 1000 ist,

b = 0 bis 1000,

c = 0 bis 1000,

d = 0 bis 1000,

mit der Maßgabe, dass die Gruppen mit den Indices a, b, c und d frei permutierbar über die Molekülkette sind,

e = 1 bis 10,

g + f = 3 und g mindestens gleich 1 ist,

h = 0 bis 10,

wobei die verschiedenen Monomereinheiten sowohl der Fragmente mit den Indices a, b, c, und d als auch der Polyoxyalkylenkette des Substituenten $R^1$ untereinander blockweise aufgebaut sein können oder aber einer statistischen Verteilung unterliegen und zudem untereinander frei permutierbar sind,

mit der Maßgabe, dass mindestens 10 mol-% der Reste M, bezogen auf die Gesamtmenge der Reste M, $-NH-R^{12}$ der Formel (IVa) und/oder $-NR^{12}_2$ der Formel (IVb) entsprechen,

wobei für die Formeln (IVa), (IVb) und (IVc) gilt:

$R^{12}$ der Formeln (IVa), (IVb) und (IVc) sind unabhängig voneinander gleiche oder verschiedene, gegebenenfalls substituierte Kohlenwasserstoffreste, die durch Heteroatome unterbrochen sind oder gegebenenfalls substituierte Kohlenwasserstoffreste mit 1 bis 30 C-Atomen,.
D ist ein Polyetherrest $-(D^{A)}_tD^X$ mit t gleich 2,
T ist ein Polyetherrest $-(D^{A)}_tD^X$ mit t gleich 3 und
Q ist ein Polyetherrest $-(D^{A)}_tD^X$ mit t gleich 4,

mit

$D^X$ ein t-valenter funktioneller, gesättigter oder ungesättigter, linearer oder verzweigter organischer Kohlenwasserstoffrest ist, der als Heteroatome O, S, Si und / oder N enthalten kann, und
$D^A$ ein Fragment der Formel (II)

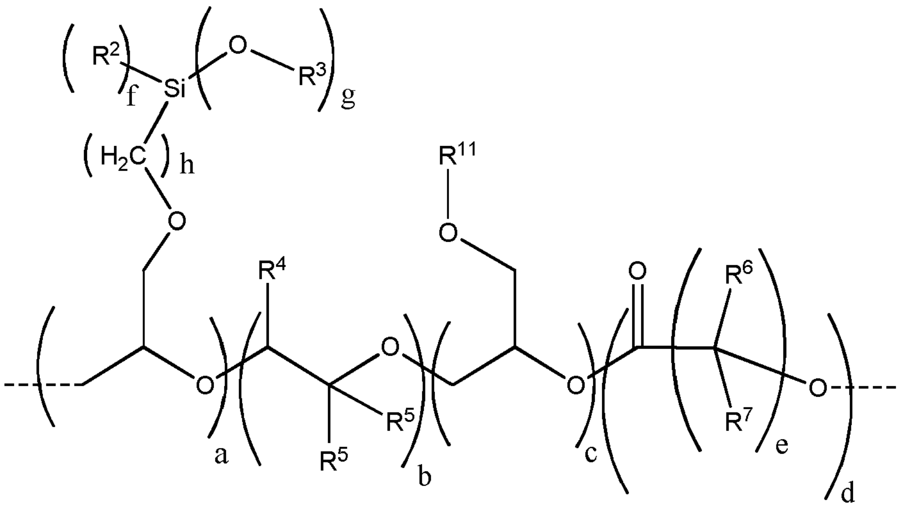

Formel (II)

ist, mit a bis h und $R^2$ bis $R^7$ und $R^{11}$ definiert wie in Formal (Ia) und mit der Maßgabe, dass die Summe aller Indices b der Formeln (Ia) und (II) mindestens 1 ergibt und die Summe aller Indices a der Formeln (Ia) und (II) mindestens 1 ergibt.
UR ein divalenter Rest der Form $-U-D^C-U-$ ist, wobei U eine -C(O)-NH-Gruppe ist, die über den Stickstoff an $D^C$ gebunden ist, wobei $D^C$ ein divalenter Kohlenwasserstoffrest ist,
AP sind unabhängig voneinander gleiche oder verschiedene Reste der allgemeinen Formel (IIIa) oder (IIIb)

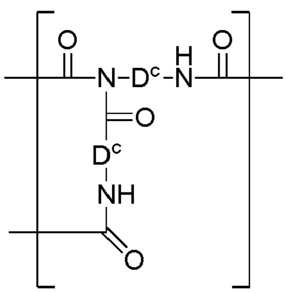

(IIIa)

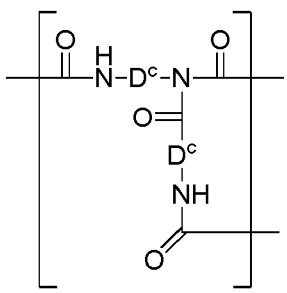

(IIIb).

2. Alkoxylierungsprodukte nach Anspruch 1 **dadurch gekennzeichnet, dass** k und l gleich null sind.

3. Alkoxylierungsprodukte nach zumindest einem der Ansprüche 1 oder 2 **dadurch gekennzeichnet, dass** in Formel (Ia) a = 0 ist.

4. Alkoxylierungsprodukte nach zumindest einem der Ansprüche 1 bis 3 **dadurch gekennzeichnet, dass** die Summe aller Indices a aus Formel (Ia) und Formel (II) mindestens gleich 2 ergibt und/oder die Summe aller Indices b aus

Formel (Ia) und Formel (II) mindestens gleich 3 ergibt.

5. Alkoxylierungsprodukte nach zumindest einem der Ansprüche 1 bis 4 **dadurch gekennzeichnet, dass** mindestens 25 mol-% der Reste M, bevorzugt mindestens 51 mol-% der Reste M, bezogen auf die Gesamtmenge der Reste M, -NH-$R^{12}$ der Formel (IVa) und/oder-$NR^{12}_2$ der Formel (IVb) entsprechen.

6. Verfahren zur Herstellung von Alkoxylierungsprodukten durch Umsetzung von OH-Gruppen tragenden Polyethern, bevorzugt der Formel $(HD^{A)})_tD^X$, mit mehrfach funktionellen Isocyanaten und mit Verbindungen der Formel H-NH-$R^{12}_2$ gemäß Formel (IVa) und/oder H-$NR^{12}_2$ gemäß Formel (IVb).

7. Verfahren nach Anspruch 6 **dadurch gekennzeichnet, dass** als mehrfach funktionelle Isocyanate Diisocyanate eingesetzt werden.

8. Verfahren nach zumindest einem der Ansprüche 6 oder 7 **dadurch gekennzeichnet, dass** als Verbindungen der Formel H-NH- $R^{12}_2$ gemäß Formel (IVa) und/oder H-$NR^{12}_2$ gemäß Formel (IVb) mindestens eine Verbindung ausgewählt aus Ethylamin, Diethylamin, Propylamin, Dipropylamin, Butylamin, Dibutylamin, Dicyclohexylamin, Dihexylamin, 2-Ethylhexylamin, Di-2-(ethylhexyl)amin, Ditridecylamin, Anilin, 1-Phenylethylamin, 2,6-Xyliden, 2-Phenylethylamin, Benzylamin, Toluidin, 2-Methoxyethylamin, 3-Methoxypropylamin, Di-(2-methoxyethyl)amin, 2-(Diethylamino)ethylamin, 3-(Dimethylamino)-1-propylamin, Bis-[(3-dimethylamino)propyl]amin, N-(3-Aminopropyl)imidazol und aminofunktionelle Polyether eingesetzt wird.

9. Verfahren nach zumindest einem der Ansprüche 6 bis 8 **dadurch gekennzeichnet, dass** in einem ersten Umsetzungsschritt (a) Polyether der Formel $(HD^A)_tD^X$ mit Diisocyanaten umgesetzt werden und in einem zweiten Umsetzungsschritt (b) das Produkt des ersten Umsetzungsschrittes (a) mit einem Molekül der Formel H-M umgesetzt werden, mit -$(D^A)_tD^X$ und M wie in Anspruch 1 definiert.

10. Verfahren nach zumindest einem der Ansprüche 6 bis 9 **dadurch gekennzeichnet, dass** die Diisocyanate im molaren Überschuss gegenüber den Polyethern $(HD^A)_tD^X$ eingesetzt werden.

11. Verfahren nach zumindest einem der Ansprüche 6 bis 10 **dadurch gekennzeichnet, dass** nach dem ersten Umsetzungsschritt (a) und/oder nach dem zweiten Umsetzungsschritt (b) mindestens eine weitere Komponente ausgewählt aus Katalysatoren, Polyethern $(HD^A)_tD^x$, Diisocyanaten und/oder Molekülen der Formel H-M zugegeben wird.

12. Zusammensetzungen enthaltend die Alkoxylierungsprodukte nach zumindest einem der Ansprüche 1 bis 5 oder/und die Produkte des Verfahrens nach zumindest einem der Ansprüche 6 bis 11.

13. Zusammensetzung nach Anspruch 12 **dadurch gekennzeichnet, dass** sie zumindest einen Härtungskatalysator enthält.

14. Zusammensetzung nach zumindest einem der Ansprüche 12 oder 13 enthaltend mindestens einen weiteren Zusatzstoff ausgewählt aus der Gruppe der Verdünner, Katalysatoren, Weichmacher, Füllstoffe, Lösungsmittel, Emulgatoren, Haftvermittler, Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Reaktivverdünner Komplexbildner, Netzmittel, co-Vernetzer, Sprühhilfsmittel, Vitamine, Wuchsstoffe, Hormone, pharmakologische Wirkstoffe, Duftstoffe, Radikalfänger und/oder andere Zuschlagstoffe.

15. Verwendung der Alkoxylierungsprodukte, der Verfahrensprodukte und/oder der Zusammensetzungen nach zumindest einem der Ansprüche 1 bis 14 als oder zur Herstellung von Klebstoff- oder Dichtstoffmassen oder Beschichtungsmittel, Formkörper, Flüssigpasten, Pulverlackhärter, Partikel, Gewebe oder Verbundwerkstoffen.

16. Verwendung gemäß Anspruch 15 zur Abdichtung und/oder Verklebung und/oder Verschäumung und/oder zur Beschichtung von porösen oder nicht-porösen, partikulären oder flächigen Substraten ausgewählt aus der Gruppe umfassend Konstruktionselemente, Bauteile, Metalle und Konstruktionswerkstoffe, Eisen, Stahl, Edelstahl und Gusseisen, keramische Materialien enthaltend feste Metall- oder Nichtmetalloxide oder Carbide, Aluminiumoxid, Magnesiumoxid oder Calciumoxid, sowie mineralische Substrate, organische Substrate, Verbundwerkstoffe, Holzverbundstoffe, Kork, Span- und Faserplatten aus Holz oder Kork, MDF-Platten, WPC-Artikel, Korkartikel, laminierte Artikel, Keramiken, Naturfasern, Kunstfasern und/oder Holz.

Europäisches Patentamt
European Patent Office
Office européen des brevets

# EUROPÄISCHER RECHERCHENBERICHT

Nummer der Anmeldung
EP 14 17 9646

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 415 797 A1 (EVONIK GOLDSCHMIDT GMBH [DE]) 8. Februar 2012 (2012-02-08)<br>* Ansprüche 1,7-19 *<br>* Beispiel 10 *<br>* Seite 8, Zeile 33 - Zeile 38 * | 1-16 | INV.<br>C08G65/22<br>C08G18/50<br>C08G65/333<br>C08G65/336 |
| A | US 2011/042004 A1 (SCHUBERT FRANK [DE] ET AL) 24. Februar 2011 (2011-02-24)<br>* Anspruch 1 *<br>* Absatz [0278] * | 1-16 | |
| A | WO 2012/130674 A2 (EVONIK GOLDSCHMIDT GMBH [DE]; BRUGGER BASTIAN MATTHIAS [DE]; SCHUBERT) 4. Oktober 2012 (2012-10-04)<br>* Ansprüche 1-13 *<br>* Seite 25, Zeile 19 - Zeile 25 * | 1-16 | |
| A | EP 2 415 796 A1 (EVONIK GOLDSCHMIDT GMBH [DE]) 8. Februar 2012 (2012-02-08)<br>* Anspruch 1 *<br>* Beispiel 2 * | 1-16 | |

RECHERCHIERTE SACHGEBIETE (IPC)
C08G

Der vorliegende Recherchenbericht wurde für alle Patentansprüche erstellt

2

| Recherchenort | Abschlußdatum der Recherche | Prüfer |
|---|---|---|
| Den Haag | 21. November 2014 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 14 17 9646

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2014

| Im Recherchenbericht angeführtes Patentdokument | Datum der Veröffentlichung | Mitglied(er) der Patentfamilie | Datum der Veröffentlichung |
|---|---|---|---|
| EP 2415797 A1 | 08-02-2012 | CA 2747609 A1 | 02-02-2012 |
| | | CN 102432862 A | 02-05-2012 |
| | | DE 102010038774 A1 | 02-02-2012 |
| | | EP 2415797 A1 | 08-02-2012 |
| | | JP 2012031411 A | 16-02-2012 |
| | | US 2012029090 A1 | 02-02-2012 |
| US 2011042004 A1 | 24-02-2011 | CA 2713384 A1 | 19-02-2011 |
| | | CN 101993521 A | 30-03-2011 |
| | | DE 102009028640 A1 | 24-02-2011 |
| | | EP 2289972 A1 | 02-03-2011 |
| | | JP 5601933 B2 | 08-10-2014 |
| | | JP 2011042788 A | 03-03-2011 |
| | | US 2011042004 A1 | 24-02-2011 |
| WO 2012130674 A2 | 04-10-2012 | DE 102011006366 A1 | 04-10-2012 |
| | | WO 2012130674 A2 | 04-10-2012 |
| EP 2415796 A1 | 08-02-2012 | CA 2747477 A1 | 02-02-2012 |
| | | CN 102399361 A | 04-04-2012 |
| | | DE 102010038768 A1 | 02-02-2012 |
| | | EP 2415796 A1 | 08-02-2012 |
| | | JP 2012031412 A | 16-02-2012 |
| | | US 2012028022 A1 | 02-02-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 69831518 T2
- JP 09012863 B
- JP 09012861 B
- JP 07062222 B
- EP 2093244 A
- DE 102010038774
- US 3427256 A
- US 3427334 A
- US 3427335 A
- US 3278457 A
- US 3278458 A
- US 3278459 A
- US 5470813 A
- US 5482908 A
- EP 1017738 A
- US 5777177 A
- EP 0981407 A
- WO 2006002807 A
- EP 1474464 A
- WO 2005100482 A
- DE 102006054155
- WO 2005003201 A

### In der Beschreibung aufgeführte Nicht-Patentliteratur

- Dictionary of Natural Products. Chapman and Hall/CRC Press, Taylor and Francis Group, 2011